(19) **Europäisches Patentamt / European Patent Office / Office européen des brevets**

(11) **EP 1 678 523 B1**

(12) # EUROPÄISCHE PATENTSCHRIFT

(45) Veröffentlichungstag und Bekanntmachung des Hinweises auf die Patenterteilung:
**18.07.2007 Patentblatt 2007/29**

(21) Anmeldenummer: **03819051.8**

(22) Anmeldetag: **29.10.2003**

(51) Int Cl.:
*G01S 17/93* (2006.01)    *G01S 7/486* (2006.01)
*G01S 7/481* (2006.01)    *G01S 17/89* (2006.01)

(86) Internationale Anmeldenummer:
**PCT/EP2003/012007**

(87) Internationale Veröffentlichungsnummer:
**WO 2005/052633 (09.06.2005 Gazette 2005/23)**

(54) **ABSTANDSSENSOR UND VERFAHREN ZUR ABSTANDSERFASSUNG**

DISTANCE SENSOR AND METHOD FOR DISTANCE DETECTION

CAPTEUR DE DISTANCE ET PROCEDE ET DE DETECTION DE LA DISTANCE

(84) Benannte Vertragsstaaten:
**AT CH DE FR LI**

(43) Veröffentlichungstag der Anmeldung:
**12.07.2006 Patentblatt 2006/28**

(73) Patentinhaber: **Fraunhofer-Gesellschaft zur Förderung der angewandten Forschung e.V.
80686 München (DE)**

(72) Erfinder:
- **SCHREY, Olaf
  40878 Ratingen (DE)**
- **BROCKHERDE, Werner
  47259 Duisburg (DE)**
- **HOSTICKA, Bedrich
  45478 Mühlheim/Ruhr (DE)**

(74) Vertreter: **Stöckeler, Ferdinand et al
Schoppe, Zimmermann,
Stöckeler & Zinkler
Postfach 246
82043 Pullach bei München (DE)**

(56) Entgegenhaltungen:
EP-A- 1 152 261    WO-A-89/12837
US-A- 5 519 209    US-A- 5 870 180
US-A- 5 977 705    US-A- 6 121 600
US-A1- 2002 117 340    US-A1- 2003 178 983
US-B1- 6 400 396    US-B1- 6 583 863

- SCHREY O M ET AL: "A 4x64 pixel cmos image sensor for 3d measurement applications" SPIE, 16. September 2003 (2003-09-16), Seiten 333-336, XP010677477
- HOSTICKA B J ET AL: "CMOS IMAGING FOR AUTOMOTIVE APPLICATIONS" IEEE TRANSACTIONS ON ELECTRON DEVICES, IEEE INC. NEW YORK, US, Bd. 50, Nr. 1, Januar 2003 (2003-01), Seiten 173-183, XP001170416 ISSN: 0018-9383
- JEREMIAS R ET AL: "A CMOS photosensor array for 3D imaging using pulsed laser" IEEE INTERNATIONAL SOLID STATE CIRCUITS CONFERENCE, IEEE INC. NEW YORK, US, 5. Februar 2001 (2001-02-05), Seiten 252-253,452, XP002265916 ISSN: 0193-6530
- SANTOS CONDE J E ET AL: "A smart airbag solution based on a high speed CMOS camera system" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24. Oktober 1999 (1999-10-24), Seiten 930-934, XP010368821 ISBN: 0-7803-5467-2

**Beschreibung**

Die vorliegende Erfindung bezieht sich auf Abstandsmessungen im allgemeinen und insbesondere auf eine Abstandsmessung, wie sie bei 3D-Kameras verwendet werden kann.

Bildaufnehmende Sensoren bieten die Möglichkeit, Tiefe nicht taktil zu erfassen. Dies kann beispielsweise mit Hilfe extrem kurzer Shutter-Zeiten bei Nah-Infrarot- (NIR-) Lichtpulslaufzeitmessung geschehen. Heutzutage sind beispielsweise schon CMOS-Kameras mit aktiver NIR-Beleuchtung möglich, die dreidimensionale Objektinformationen mittels gepulster elektromagnetischer Strahlung erfassen. Durch Aufnahme mit kurzer Belichtung werden dreidimensionale Abstandsbilder des aufgenommenen Objektes erzeugt. Ein Beispiel eines solchen 3D-Sensors ist in der DE 19757595 A1 beschrieben.

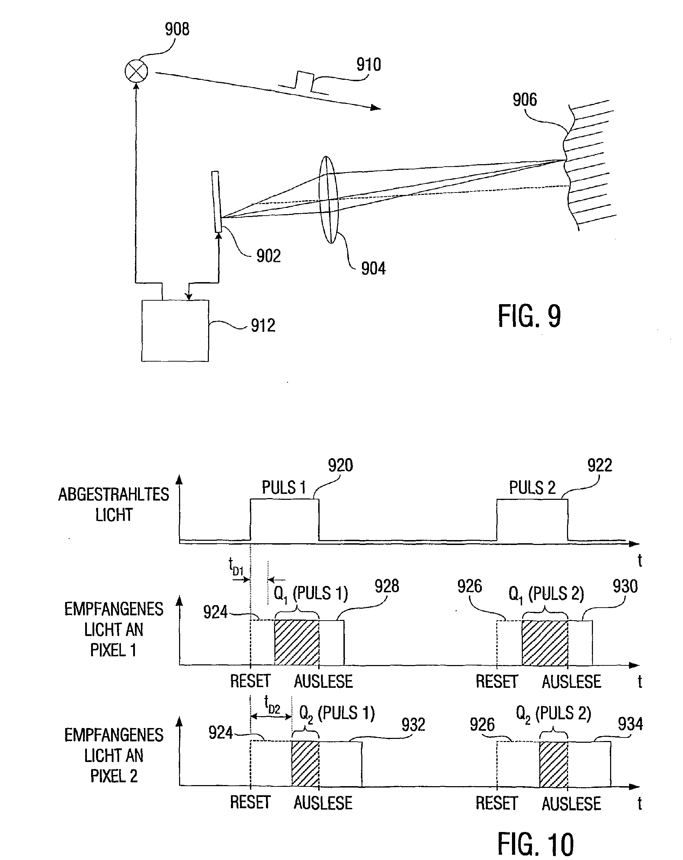

Fig. 9 soll das Messprinzip dieser 3D-Sensoren verdeutlichen. Verwendet wird ein optoelektronischer CMOS-Sensor 902, dessen Pixel wahlfrei auslesbar und dessen Integrationszeit pixelweise einstellbar ist. Eine Optik 904 bildet das zu vermessende Objekt 906 auf den Sensor 902 ab. Das Objekt 906 wird durch eine gepulste Lichtquelle 908 mit einem oder mehreren sehr kurzen Lichtpulsen 910 beleuchtet, woraufhin Lichtpulse der gleichen Länge von dem Objekt 906 zurückgestreut werden. Diese zurückgestreuten Lichtpulse werden über die Optik 904 auf den CMOS-Sensor 902 geleitet.

Aufgrund der unterschiedlichen Abstände unterschiedlicher Objektpunkte zu dem Sensor 902 werden die mit diesen Objektpunkten korrespondierenden zurückgestreuten Lichtimpulse zu unterschiedlichen Zeiten am Sensor ankommen. Für eine Abstandsmessung wird an den Pixeln des Sensors 902 ein Zeitmess- bzw. Belichtungsfenster geöffnet, das einer vorbestimmten Integrationszeit entspricht. Abstrahlzeiten und Integrationszeiten werden durch eine Steuereinrichtung 912 gesteuert und synchronisiert. Der erste in den Sensor 902 einfallende zurückgestreute Lichtimpuls wird bei Übereinstimmung der Integrationszeit mit der Abstrahlzeit in etwa mehr oder weniger vollständig aufgenommen werden. Die aufgrund des größeren Abstands des Objektpunktes von dem Sensor 902 zeitverzögert eintreffenden Lichtimpulse werden nicht vollständig aufgenommen, sondern hinten abgeschnitten. Auf diese Weise kann anhand der unterschiedlichen Ladungen, die während der Integrationszeit in den einzelnen Pixeln des Sensors 902 gesammelt werden, die unterschiedlichen Laufzeiten und damit die Abstände des jeweiligen Pixels von seinem Objektpunkt bestimmt werden. Hieraus lässt sich ein dreidimensionales Abstandsbild errechnen für die Steuer- bzw. Auswerteeinrichtung 912.

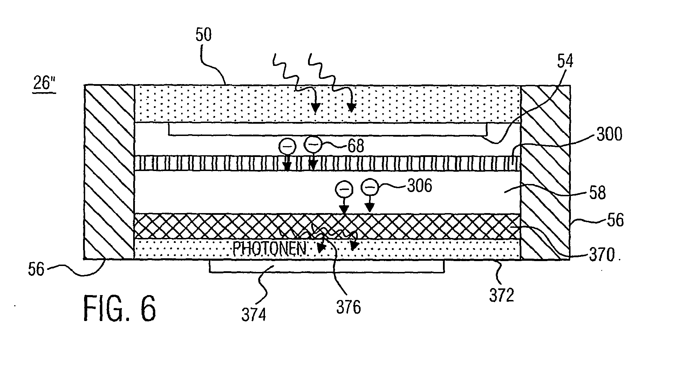

Das in Fig. 6 dargestellte Meßsystem kombiniert folglich extrem kurze Shutter-Zeiten mit Lichtpulslaufzeitverfahren. Mit Hilfe einer CMOS-Kamera nach Fig. 9 lassen sich nicht nur Kameras mit intelligenten Pixeln realisieren, die außer der Standardbildaufnahme auch die Präsenz von Personen anhand von Bewegungen bestimmen oder dieselben sogar im Rahmen eines Trackings verfolgen können, sondern sie bieten ferner die Möglichkeit, optische Tiefenmessung auf der Basis der NIR-Lichtlaufzeitmessung zu realisieren, entweder für bestimmte Bildbereiche oder ganze Bilder. Auf diese Weise sind also 3D-CMOS-Kameras realisierbar, die in der Lage sind, 2D- und 3D-Bildaufnahmen zu kombinieren.

Mit dem Verfahren der 3D-Abstandsmessung mittels CMOS-Bildsensoren kommt der Anwender insbesondere in die Lage, dreidimensionale Bildszenen elektronisch in Echtzeit verarbeiten zu können. Daraus ergibt sich eine Fülle von Anwendungsgebieten. Beispielsweise dreidimensionale Inspektions- und Plazierung- bzw. Placement-Systeme sind zur zuverlässigen Objekterkennung und Klassifizierung auf möglichst viele Bildinformationen angewiesen. In automotiven Systemen könnte die 3D-Abstandsmessung Überwachungsaufgaben übernehmen, wie z. B. die Kfz-Innenraumerkennung mit intelligenter Airbagauslösung, Diebstahlsicherung, Fahrbahnerkennung und frühzeitige Unfallerkennung. Die 3D-Abstandsmessung könnte jedoch auch ganz einfach zur Topographievermessung, wie in Fig. 6 gezeigt, oder zur Personenerkennung oder als Präsenzsensorik verwendet werden. Speziell in der intelligenten Airbag-Auslösung muss beispielsweise vom Kamerasystem die Aufgabe gelöst werden, den Airbag in Abhängigkeit von dem Abstand des Fahrgasts mit verzögerter Stärke aufzulösen. Mit 3D-CMOS-Bildsensoren ist dies problemlos möglich. Seitens der Industrie besteht somit eine große Nachfrage nach solchen intelligenten Systemen, was wiederum ein erhebliches Marktpotential für 3D-Kameras bedeutet.

Existierende 3D-CMOS-Bildsensoren zur Abstand- bzw. Tiefenmessung, deren Messprinzip Bezug nehmend auf Fig. 6 beschrieben worden ist, basieren in weiten Teilen auf dem Funktionsprinzip des aktiven Pixel-Sensors (APS). Hierbei wird, wie oben beschrieben, die zeitliche Öffnung des Belichtungsfensters bzw. Integrationsfensters des Pixels mit der gepulsten Auflösung der aktiven Szenenbeleuchtung synchronisiert.

Um dies nun näher zu veranschaulichen, ist in Fig. 10 der Lichtintensitätsverlauf an der Lichtquelle 908 und an zwei exemplarischen Pixeln des Sensors 902 in drei übereinander angeordneten Graphen dargestellt, deren x-Achse die Zeitachse darstellt und zueinander ausgerichtet sind, und deren y-Achse die Intensität des gepulsten reflektierten Lichts am Ort der Pixel in willkürlichen Einheiten bzw. das Vorhandensein desselben angibt. In dem obersten Graphen sind zwei aufeinanderfolgende abgestrahlte Lichtimpulse 920 und 922 dargestellt. Synchronisiert durch die Steuerung 912 wird gleichzeitig zu der Abstrahlung und mit derselben Zeitdauer ein Integrations- bzw. Belichtungsfenster in den Pixeln des Sensors 902 geöffnet, in denen der in denselben erzeugte Photostrom akkumuliert wird, wie es durch gestrichelte Linien in den unteren beiden Graphen 924 und 926 angezeigt ist, wobei der mittlere Graph das empfangene Licht an einen Pixel 1 und der untere Graph das empfangene Licht an einem anderen Pixel 2 anzeigt. In dem mittleren Graphen sind die beiden reflektierten Lichtpulse 928 und 930 zu erkennen, die sich auf die Pulse 920 und 922 hin am Pixel 1 ergeben. Wie es aus den unteren Graphen zu sehen ist, sind die reflektierten Lichtpulse 932 und 934 die sich an dem anderen Pixel 2 ergeben, erst nach einer größeren Laufzeitdifferenz $t_{D2}$ am Sensor 902 angelangt als die Laufzeitdauer $t_{D1}$ beim ersten Pixel 1. Die unterschiedliche Überlappung des reflektierten Lichtpulses an dem jeweiligen Pixel mit den Belichtungsfenstern 924 und 926 führt zu unterschiedlich akkumulierten Ladungen an den Pixeln, die an dem Ende jedes Belichtungsfensters 924 bzw. 926 ausgelesen werden. Insbesondere sind also die Ladungsmengen $Q_1$ (Puls 1) und $Q_1$ (Puls 2) an dem Pixel 1 größer als die Ladungsmengen $Q_2$ (Puls 1) und $Q_2$ (Puls 2) an dem Pixel 2. Unmittelbar vor jedem Belichtungsfenster 924 und 926 findet ein Rücksetzen bzw. Reset des entsprechenden Pixels statt, bei welchem die Ladung des entsprechenden Pixels auf einen Referenzwert voreingestellt wird, bzw. bei welchem der der Photodiode des Pixels zugehörige Kondensator auf einen vorbestimmten Wert aufgeladen wird.

Wie im vorhergehenden Bezug nehmend auf Fig. 6 beschrieben, sollten sich aus den Ladungsmengen $Q_1$ bzw. $Q_2$, die ja den erzeugten Ladungsträgern aufgrund der reflektierten Lichtpulse entsprechen, die Abstände des entsprechenden Objektpunktes ermitteln lassen, der auf das jeweilige Pixel abgebildet wird, da ja die Ladungsmenge $Q$ im Wesentlichen linear von der Laufzeitverzögerung $t_{D1}$ bzw. $t_{D2}$ und diese wiederum unter $2R/v_c$ von dem Abstand $R$ abhängt, wobei $v_c$ die Lichtausbreitungsgeschwindigkeit im Ausbreitungsmedium bezeichne und bei Luft ungefähr der Lichtgeschwindigkeit $c$ entspricht, so dass gilt:

$$Q \propto 2R/v_c$$

Verschiedene Probleme führen jedoch zu Abweichungen von der Theorie. So wird mit dem gewünschten Pulslicht auch immer ein Anteil unerwünschten Hintergrundlichtes mit erfasst. Außerdem beeinflusst auch die Reflektivität der Szenenobjekte den Anteil des rückgestrahlten Lichtes. Diese Faktoren verfälschen das Nutzsignal, nämlich die Ladungsmengen $Q_1$ bzw. $Q_2$, je nach Entfernung des Objektes zum Teil erheblich. Um unverfälschte Abstandsinformation zu erzielen, sind deshalb Korrekturmaßnahmen erforderlich. Die oben zitierte DE 19757595 A1 schlägt zur Normierung der Oberflächenreflexion die Durchführung zweier Aufnahmen vor, nämlich eine mit der oben beschriebenen kurzen Aufnahmezeit und eine weitere mit einer ausreichend langen Aufnahmezeit, um im Belichtungsfenster die reflektierten Pulse in ihrer Gesamtheit zu erfassen, wobei die Differenz beider Aufnahmen geteilt durch die Aufnahme mit langer Belichtung ein normiertes Abstandbild ergibt. Zur Hintergrundlichtunterdrückung wird vorgeschlagen, die zusätzlich zu den obigen Kurzzeit- und Langzeitmessungen jeweils eine weitere Kurzzeit- und Langzeitmessung durchzuführen, allerdings ohne Beleuchtung, und diese Aufnahmen von der jeweils noch vor Berechnung des normierten Abstandsbildes zugehörigen abzuziehen.

Trotz dieser Korrekturen ist es für eine ausreichend hohe Genauigkeit der Abstandsmessung erforderlich, ganze Pulssequenzen auf der Pixelstruktur zu akkumulieren, um auf diese Weise ein brauchbares Signalrauschverhältnis zu erzielen. Dies limitiert jedoch die Bandbreite des Systems.

Nachteilhaft an dem oben dargestellten Meßsystem ist nun, dass dasselbe nicht in allen Anwendungsgebieten mit ausreichender Zuverlässigkeit arbeitet. Speziell in der oben erwähnten intelligenten Airbag-Auslösung und bei der Fahrbahnerkennung sind an das Abstandssystem hohe Zuverlässigkeitsanforderungen gestellt. Eine Nichtauslösung des Airbags hätte fatale Folgen, ebenso wie eine Fehlfunktion in der Fahrbahnerkennung. Oben dargestellte 3D-CMOS-Abstandsmeßsysteme erfüllen beispielsweise deshalb die erforderlichen Zuverlässigkeitskriterien nur mit hohem Aufwand, weil sie anfällig auf Nebel- oder Regensituationen sind und somit nicht zuverlässig den Abstand zum vorausfahrenden Fahrzeug bestimmen können. Oben dargestellte 3D-CMOS-Abstandsmeßsysteme, welche typischerweise bei sichtbarem bzw. im menschlichen Auge wirksamem Laserlicht mit ca. 900 nm Wellenlänge arbeiten, würden bei Kfz-Außenüberwachung eine sehr viel höhere Pulsleistung benötigen, um zuverlässig den Abstand bestimmen zu können, was sich aus Gründen der Augensicherheit verbietet. Vor allem bei der Airbag-Auslösung, wo die zu schützende Person beleuchtet wird, stellen die Anforderungen an die Augensicherheit eine technische Hürde dar.

Neben den oben beschriebenen CMOS-Photodiodenarrays zur Erfassung der reflektierten Pulse gibt es freilich auch andere Empfängerarrays, wie z.B. CCD-Chips. Die DE 19927694 C1 schlägt zur Erfassung lichtschwacher Objekte vor, Strahlung in einer Schichtabfolge aus metallener Photokathode, Vakuumbereich, Multi-Kanal-Platte, Vakuumbereich und leitfähiger in Pixelbereiche strukturierter Pixeloberflächenschicht zu empfangen. Eine zweite leitfähige Schicht ist isoliert von der ersten isolierten Schicht vorgesehen, um in lateraler Ausdehnung die Zwischenräume der ersten Schicht einzunehmen. Auf diese Weise wird laut der DE 19927694 C1 ein unterhalb der Schichtabfolge befindliches Halbleiterelement mit den darin befindlichen Halbleiterstrukturen vor den Photoelektronen geschützt, die mittels photoelektrischem Effekt aus der Photokathode herausgelöst und auf die Pixelschicht beschleunigt werden.

Die Aufgabe der vorliegenden Erfindung besteht darin, einen Abstandssensor und ein Verfahren zur Entfernungserfassung zu schaffen, so dass variablere Einsatzmöglichkeiten ab einer erhöhten Zuverlässigkeit und/oder Genauigkeit bestehen.

Diese Aufgabe wird durch einen Sensor gemäß Anspruch 1 und ein Verfahren gemäß Anspruch 11 gelöst.

Die Erkenntnis der vorliegenden Erfindung besteht darin, dass es eine indirekte Erfassung der reflektierten Strahlungspulse bei der Abstandsmessung mittels Photoeffekt ermöglicht, die Einsetzbarkeit des Abstandssensors bzw. des Entfernungsmessverfahrens deutlich zu erweitern, wobei die Anpassung an ein neues Einsatzgebiet nur geringfügige Entwurfsänderungen benötigt.

Da bei dem äußeren Photoeffekt die Photoelektronen photonenweise bzw. quantenweise aus dem bestrahlten Material herausgelöst werden und die Photonen beim Herauslösen lediglich eine gewisse Mindestenergie und dementsprechend die zur Bestrahlung verwendete Strahlung lediglich eine ausreichend kleine Wellenlänge benötigt, ermöglicht es der äußere Photoeffekt, Strahlungen über einen großen spektralen Bereich hinweg erfassbar zu machen. Treten auf einem bestimmten Anwendungsgebiet Störungen bei einem bestimmten Wellenlängenbereich auf, so kann der Arbeitswellenlängenbereich der Abstandssensorik zunächst auf einfache Weise auf einen anderen spektralen Bereich eingestellt werden, indem für die Strahlungsquelle eine solche verwendet wird, die ein Spektrum außerhalb des mit Störungen versehenen spektralen Bereichs aufweist.

Obwohl der äußere Photoeffekt grundsätzlich einen großen spektralen Erfassungsbereich ermöglicht, ist es jedoch durch die Verwendung eines beispielsweise geeignet dotierten Halbleitermaterials möglich, das Auftreten des äußeren Photoeffekts auf bestimmte schmale Frequenzbereiche bzw. Frequenzbänder einzustellen, indem geeignete Fremdatome zur Dotierung ausgewählt werden. Damit kann das Signalrauschverhältnis zwischen dem Nutzsignal, nämlich dem reflektierten elektromagnetischen Strahlungspuls auf der einen und der Hintergrundstrahlung auf der anderen Seite, gering gehalten werden.

Wird ein Elektronenvervielfacher verwendet, um die abgegebenen bzw. herausgelösten Photoelektronen zu vervielfachen, so können bei der Abstandsmessung die Pulsbreiten geringer gehalten werden, da die Menge der von dem Objektpunkt reflektierten elektromagnetischen Strahlung pro Zeiteinheit zu mehr detektierbaren Elektronen führt. Auf diese Weise kann der Signalrauschabstand zwischen Nutzstrahlung und Hintergrundstrahlung auf der einen und der Signalrauschabstand zum Rauschen der Sensor- bzw. Systemelektronik erhöht werden. Insgesamt wird es hierdurch möglich, Abstandsmessungen auch bei Anwendungsgebieten zu betreiben, die eine höhere Genauigkeit erfordern, als sie durch CMOS-Photodioden-basierte Abstandssensoren gewährleistet wird.

Ferner ermöglicht es der Zwischenschritt bei der Erfassung der reflektierten elektromagnetischen Strahlung über den äußeren Photoeffekt bei Zusammenfassung mehrerer erfindungsgemäßer Abstandssensoren zu einem Array von Abstandssensoren eine höhere Auflösung zu erzielen, wodurch hochauflösende 3D-Kameras erhalten werden können. Der Grund dafür besteht darin, dass die abgegebenen Photoelektronen auf einfache Weise durch eine einfach und sehr genau strukturierbare Gegenelektrodenarrayanordnung aufgefangen werden können, die zusammen mit der Photoelektrode als Kondensator zur Speicherung der abgegebenen Photoelektronen sowie zur Beschleunigung der abgegebenen Photoelektronen durch Anlegen einer Beschleunigungsspannung zwischen Photoelektrode und Gegenelektrode dient.

Durch die Möglichkeit, den Arbeitswellenbereich verstellen zu können, ist es insbesondere ferner möglich, Abstandssensorik auch in Einsatzgebieten jenseits des FIR einzusetzen. Damit ist es möglich, auch bei Einsatzgebieten, an denen aufgrund der Gefährdung des menschlichen Auges über einen großen spektralen (sichtbaren) Bereich eine Begrenzung der maximal zulässigen Werte für die Intensität der zur Bestrahlung verwendeten Strahlung existieren, ein verbessertes Signal/Rauschverhältnis dadurch zu erzielen, dass der spektrale Arbeitsbereich aus dem sichtbaren spektralen Bereich verlegt wird, da dann die Bestrahlungsintensität erhöht werden kann.

In anderen Einsatzgebieten wiederum liegt eine Beschränkung des möglichen spektralen Arbeitsbereichs deshalb vor, weil in bestimmten spektralen Bereichen eine Absorption des Mediums zwischen Objekt und Sensor oder eine Reflektivität des Objekts in einem bestimmten spektralen Bereich zu hoch bzw. zu niedrig ist. Bestimmte Flüssigkeitsmedien, wie z.B. Blut, Gewebewasser, Nebel, Feuchtigkeit usw., oder Rauch sind beispielsweise für langwelliges Licht im Mikrometerwellenlängenbereich transparent, während dieselben die Arbeitsstrahlung auf dem Weg vom Sensor zu Objekt und zurück im sichtbaren Bereich zu sehr schwächen würden, als dass eine ausreichend genaue Abstandsmessung bzw. Entfernungsmessung durchgeführt werden könnte.

Bevorzugte Ausführungsbeispiele der vorliegenden Zeichnungen werden nachfolgend Bezug nehmend auf die beiliegenden Zeichnungen näher erläutert. Es zeigen:

Fig. 1     eine schematische Zeichnung eines Abstandssensors gemäß einem Ausführungsbeispiel der vorliegenden Erfindung;

Fig. 2     eine schematische Schnittansicht der Erfassungseinrichtung des Abstandssensors von Fig. 1;

Fig. 3     exemplarische Signalverläufe, die bei der Sensoranordnung von Fig. 1 unter Verwendung der Erfassungseinrichtung von Fig. 2 gemäß einem Ausführungsbeispiel für eine Messsequenz mit Hintergrundstrahlungskorrektur und Reflektanzkorrektur auftreten;

Fig. 4    eine schematische Schnittansicht mit Ansteuerelektronik einer Erfassungseinrichtung für den Abstandssensor von Fig. 1 gemäß einem weiteren Ausführungsbeispiel der vorliegenden Erfindung;

Fig. 5    exemplarische Zeitverläufe, die bei dem Abstandssensor von Fig. 1 unter Verwendung der Erfassungseinrichtung von Fig. 4 gemäß einem Ausführungsbeispiel für einen Messzyklus mit Hintergrundstrahlungskorrektur und Reflektanzkorrektur auftreten;

Fig. 6    eine schematische Schnittansicht einer Erfassungseinrichtung für den Abstandssensor von Fig. 1 gemäß einem weiteren Ausführungsbeispiel der vorliegenden Erfindung;

Fig. 7    eine schematische Ansicht des Abstandssensors von Fig. 1 bei einem Einsatz zur Airbag-Auslösung gemäß einem Ausführungsbeispiel der vorliegenden Erfindung;

Fig. 8    eine schematische Ansicht des Sensors von Fig. 1 bei seinem Einsatz zur Abstandskontrolle in Kraftfahrzeugen gemäß einem Ausführungsbeispiel der vorliegenden Erfindung;

Fig. 9    eine schematische Zeichnung zur Veranschaulichung des Prinzips der 3D-Abstandsvermessung mittels gepulster Beleuchtung und kurzer Belichtungszeit; und

Fig. 10    Zeitverläufe, die das Vorhandensein von Licht an der Lichtquelle und zwei unterschiedlichen Pixeln des Pixelsensors darstellen, zur Veranschaulichung der Verwirklichung des Messprinzips von Fig. 9 mit einem herkömmlichen CMOS-Sensor.

Bezugnehmend auf nachfolgende Beschreibung wird darauf hingewiesen, dass gleiche oder einander entsprechende Elemente in den Figuren mit gleichen oder ähnlichen Bezugszeichen versehen sind, und dass eine wiederholte Beschreibung weggelassen wird.

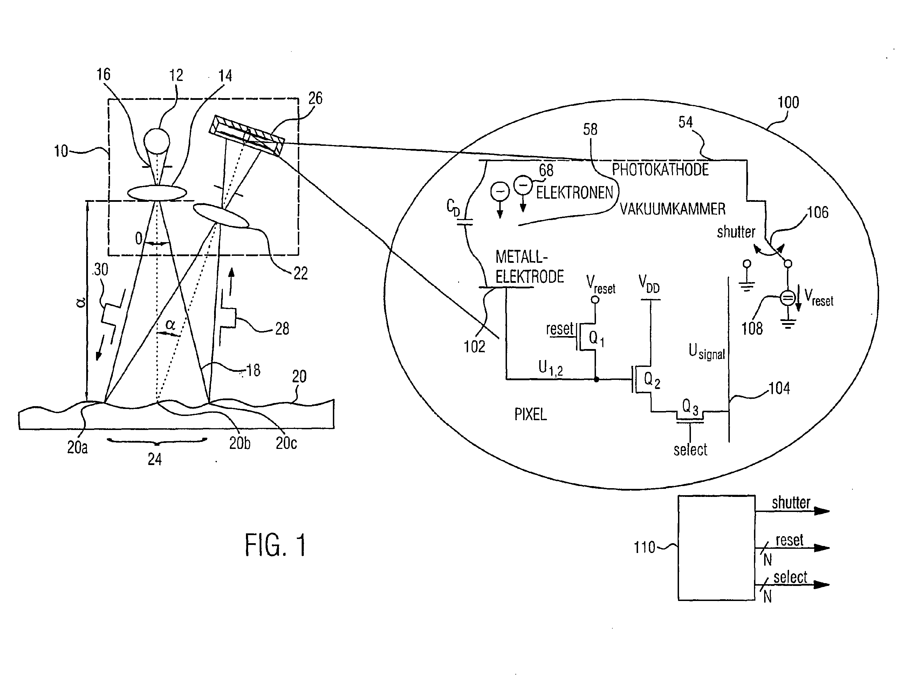

Fig. 1 zeigt einen 3D-Abstandssensor gemäß einem Ausführungsbeispiel der vorliegenden Erfindung. Der 3D-Abstandssensor ist allgemein mit 10 angezeigt. Der Abstandssensor umfasst eine Strahlungsquelle 12 für elektromagnetische Strahlung, eine Bestrahlungsoptik 14 zum Aufweiten eines Strahlenbündels 16 von der Strahlungsquelle 12, um ein aufgeweitetes Lichtbündel 18 auf ein Objekt 20 zu werden, eine Empfangsoptik 22 zum Abbilden des durch die Strahlungsquelle 16 bestrahlten Bereichs 24 des Objekts 20 auf eine lichtempfindliche Erfassungsebene einer Pixelerfassungseinrichtung 26, die ebenfalls in dem Abstandssensor 10 umfasst ist.

Die Strahlungsquelle 12 könnte jede Strahlungsquelle sein, wie z.B. eine LED oder aber ein Laser. Zur Vereinfachung der Darstellung wird nachfolgend davon ausgegangen, dass es sich bei der Strahlungsquelle 12 um einen Laser handelt, der Licht in einem Spektralbereich von 800nm bis 3$\mu$m, bevorzugterweise von 2 $\mu$m bis 3 $\mu$m, ausgibt, um den Abstandssensor 10 insbesondere für Einsätze tauglich zu machen, bei denen das menschliche Auge nicht gefährdet werden darf, wie z.B. bei der Airbag-Auslösung, oder bei denen im sichtbaren Bereich die Abstandsmessung störende Absorption oder geringe Reflektivität auftritt, wie z.B. bei der Fahrbahnerkennung, bei der Kraftfahrzeugabstandserkennung, bei der Videoendoskopie in Blutbahnen oder dergleichen.

Die Bestrahlungsoptik 14 kann jegliche Optik sein und beispielsweise eine strahlaufweitende Negativlinse aufweisen. In dem Fall einer anderen Strahlungsquelle 12 als einem Laser kann die Optik 14 jedoch auch eine strahlverengende Positivlinse aufweisen. Das Material der Optik 14 sollte an das Spektrum der Strahlungsquelle 12 angepasst sein. Insbesondere kann die Bestrahlungsoptik 14 eine Refraktivoptik sein.

Obwohl der Abstandssensor 10 freilich für alle Objekte verwendbar ist und das jeweilige Objekt 20 von dem jeweiligen Einsatzgebiet des Abstandssensors 10 abhängt, beeinflussen dennoch Eigenschaften des Objekts 20 das von der Erfassungseinrichtung 26 erfasste Signal. Das Objekt 20 kann beispielsweise eine Objektoberfläche besitzen, die als Lamber-Strahler wirkt, d.h. dass es senkrecht auffallende Strahlung derart reflektiert, dass sie von allen Seiten aus betrachtet gleich hell erscheint, bzw. in alle Abstrahlrichtungen $\alpha$ zur Flächennormalen die Intensität Io mal cos $\alpha$ abstrahlt, mit $I_0$ der senkrecht einfallenden Intensität. Auf die Beeinflussung dieser Objekteigenschaften auf die Messung wird im folgenden noch näher eingegangen.

Die Erfassungsoptik 22 kann auf eine feste Brennweite eingestellt sein oder eine variable Brennweite aufweisen bzw. als Teleobjektiv ausgelegt sein. Die Erfassungsoptik 22 bildet somit einzelne Objektpunkte 20a, 20b und 20c auf der Oberfläche des Objekts 20 auf Bildpunkte in der Bildebene ab, die die wirksame Erfassungsfläche der Erfassungseinrichtung 26 bildet. Vorzugsweise überschneiden sich abgebildeter Bildbereich und bestrahlter Bereich 24 auf dem Objekt 20 im wesentlichen vollständig.

Wie es noch später näher erörtert werden wird, empfängt die Erfassungseinrichtung 26 reflektierte elektromagnetische Strahlungspulse 28, die von der Oberfläche des Objekts 20 auf das Bestrahlen derselben mit Strahlungspulsen 30 von der Strahlungsquelle 12 hin reflektiert bzw. zurückgestreut werden. Wie es später noch näher erörtert werden wird, strahlt der Laser 12 die Laserpulse 30 in Bestrahlungszeitfenstern aus, und die Erfassungseinrichtung 26 erfasst die Menge an einfallender Lichtstrahlung in Erfassungszeitfenstern, die mit den Bestrahlungszeitfenstern synchronisiert sind. Beim eigentlichen Messzyklus, wie es ebenfalls im folgenden noch näher beschrieben wird, sind die Bestrahlungs- und Erfassungszeitfenster gleich lang und ohne Zeitversatz zueinander. Da Objektpunkte, die einen größeren Abstand d zum Sensor 10 haben, eine längere Wegstrecke zwischen Laser 12 und Erfassungseinrichtung 26 zurücklegen müssen, nämlich 2·d, als solche mit einem geringeren Abstand, überlappen die reflektierten Lichtpulse 28 weniger mit den Erfassungszeitfenstern und führen somit zu einer geringeren erfassten Lichtmenge an Pixeln der Erfassungseinrichtung 26, auf die der jeweilige Objektpunkt abgebildet wird.

Anders ausgedrückt, wird der Laserpuls 30 an der bestrahlten Oberfläche des Zielobjekts 20 reflektiert und trifft nach einer Laufzeitverzögerung $t_{Lauf} = 2·d/c_{Licht}$ (wobei $C_{Licht}$ die Lichtgeschwindigkeit im Medium zwischen Objekt 20 und Abstandssensor 10 bedeute) mit der Restenergie $E_{Laser}$ auf die photoempfindliche Fläche der Erfassungseinrichtung 26 auf. Je nachdem, wie groß die Entfernung d ist, verschiebt sich der Zeitpunkt $t_{Lauf}$ entlang der Zeitachse t nach links oder rechts. Mit wachsender Entfernung nimmt die Verzögerungszeit zu und der Punkt $t_{Lauf}$ verschiebt sich nach rechts.

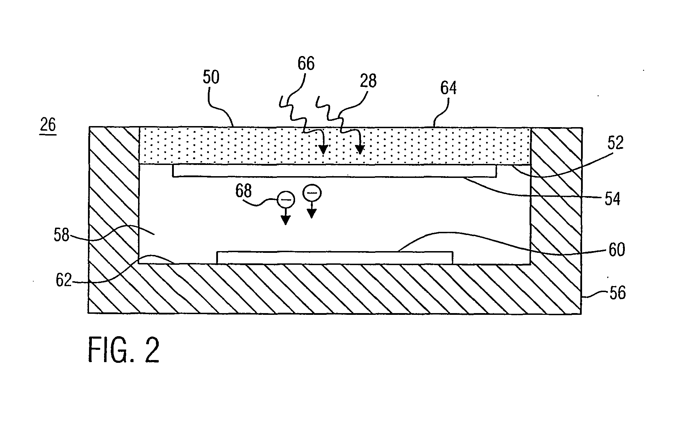

Der eigentliche Erfassungsvorgang in den einzelnen Pixeln der Erfassungseinrichtung 26 von Fig. 1 wird nun im folgenden Bezug nehmend auf Fig. 2 näher erläutert. Fig. 2 zeigt die Erfassungseinrichtung 26 gemäß einem Ausführungsbeispiel der vorliegenden Erfindung detaillierter. Die Erfassungseinrichtung 26 umfasst ein Eingangsfenster 50, wie z.B. aus Glas, eine an der Unterseite 52 des Eingangsfensters 50 beispielsweise durch Aufdampfen angebrachte Photokathode 54, ein Gehäuse 56, wie z.B. aus Keramik, das zusammen mit dem als Deckel fungierenden Eingangsfenster 50 im Inneren eine luftdicht abgeschlossene Vakuumkammer 58 bildet, und eine beispielsweise in CMOS-Technologie implementierte Halbleiterstruktur 60, die der Photokathode 54 über die Vakuumkammer 58 gegenüberliegend an einer der Unter- bzw. Innenseite 52 des Eingangsfensters 50 gegenüberliegenden Bodeninnenseite 62 des Gehäuses 56 angebracht ist. Die in Fig. 2 dargestellte Erfassungseinrichtung 26 ist mit der der Unterseite 52 gegenüberliegenden Oberseite 64 des Eingangsfensters 50 über die Erfassungsoptik 22 dem bestrahlten Objekt 20 (Fig. 1) zugewandt, und die Unterseite 52 bzw. die Grenzfläche zwischen Eingangsfenster und Photokathode 54 bildet die vorhin erwähnte lichtempfindliche Erfassungsebene, auf die die Erfassungsoptik 22 das Objekt 20 abbildet.

Durch das Eingangsfenster 50 hindurch fällt nun das reflektierte Laserlicht 28, d.h. das Nutzsignal, sowie Hintergrundlicht 66 auf die Photokathode 54 an der Innenseite 52. Durch den äußeren Photoeffekt werden Photoelektronen 68 aus dem Photokathodenmaterial herausgelöst bzw. von dem Photokathodenmaterial abgegeben. Wie es bekannt ist, geben Photonen des einfallenden Lichts 28, 66 ganz oder teilweise ihre Energie an Elektronen in der Photokathode 54 ab, die daraufhin das Photokathodenmaterial verlassen, wenn ihre Energie eine vorbestimmte materialcharakteristische Ablöseenergie überschreitet. Wie es noch im folgenden näher erörtert werden wird, liegt in den Erfassungszeitfenstern eine Beschleunigungsspannung zwischen der Photokathode 54 auf der einen und einem Array von Gegenelektroden, die den einzelnen Pixeln der Erfassungseinrichtung 26 entsprechen, auf der anderen Seite an, so dass die ausgelösten Photoelektronen 68 in den Erfassungszeitfenstern durch ein im wesentlichen homogenes elektrisches Feld in der Vakuumkammer 58 zur Halbleiterstruktur 60 bzw. den Gegenelektroden hin beschleunigt werden und dabei die Vakuumkammer 58 bis zur Halbleiterstruktur 60 durchqueren. Dort werden die Elektronen pixelaufgelöst aufgefangen und in ein weiterverarbeitbares Signal umgewandelt, wie es Bezug nehmend auf Fig. 1 näher erörtert werden wird.

Es bleibt festzuhalten, dass trotz der Umwandlung des Nutzsignals 28 an der Photokathode 54 in Photoelektronen die Bildauflösung nicht verloren geht, da Photoelektronen 68, die an einem bestimmten Ort lateral entlang der Photokathode 54 abgegeben worden sind, durch die Beschleunigungsspannung bzw. das homogene elektrische Feld stets nur an einem diesem Auslöseort eindeutig zugeordneten Auftreffort bzw. einer diesem Ort eindeutig zugeordneten Gegenelektrode auf der Halbleiterstruktur 60 auftreffen. In Nichterfassungszeitfenstern liegt, wie es im folgenden noch näher erörtert werden wird, keine Spannung oder eine entgegengerichtete Spannung zwischen den Elektroden 54 und 60 an, so dass in Nichterfassungszeitfenstern vergleichsweise wenig Photoelektronen 68 die gegenüberliegende Halbleiterstruktur 60 erreichen.

Wie es im Vorhergehenden beschrieben worden ist, ist auf einer Oberseite der Halbleiterstruktur 60, d.h. auf der der Photokathode 54 zugewandten Seite, ein Array von Gegenelektroden gebildet, die jeweils zusammen mit der Photokathode 54 eine Kapazität bilden. Ein Photokathoden/Gegenelektroden-Paar stellt ein Pixel aus einem Array von Pixeln dar. Fig. 1 stellt auf der rechten Seite ein Pixel der Erfassungseinrichtung 26 zusammen mit zugehöriger Ansteuerelektronik stellvertretend dar, wobei das Pixel mit 100 angezeigt ist. Dargestellt sind in Fig. 1 die Photokathode 54, die allen Pixeln gemeinsam ist, die dem Pixel 100 eigens zugeordnete Gegenelektrode 102, und exemplarische Photoelektronen 68, die die Vakuumkammer 58 von Photokathode 54 aus zur Gegenelektrode 102, die sich beide über die Vakuumkammer 58 gegenüberliegen, durchqueren.

Dem Pixel 100 sind eigens drei Transistoren Q1, Q2 und Q3 zugeordnet, d.h. solche Transistoren sind jedem anderen Pixel ebenfalls zugeordnet. Der Transistor Q1 ist mit seiner Source/Drain-Strecke zwischen ein Spannungspotential $V_{reset}$ und die Gegenelektrode, die beispielsweise eine Metallelektrode ist, geschaltet. An dem Steueranschluss des Transistors Q1 liegt ein Signal reset an. Die Gegenelektrode 102 ist ferner mit einem Steueranschluss des Transistors Q2 verbunden, der als Source-Folger geschaltet ist. Insbesondere ist aber der als Source-Folger geschaltete Transistor Q2 mit seiner Source/Drain-Strecke in Reihe mit einer Source/Drain-Strecke des Transistors Q3 zwischen eine Spannungsversorgung $V_{DD}$ und einen Signalausgang 104 des Pixels 100 geschaltet, wobei der Transistor Q3 mit dem Ausgang 104 verbunden ist. Ein Steueranschluss des Transistors Q3 wird von einem Signal select gesteuert. Allen Pixeln gemeinsam, hier aber für das Pixel 100 dargestellt, ist ein Schalter 106 vorgesehen, der gesteuert durch ein Signal shutter die Photokathode wahlweise auf Masse bzw. auf ein Bezugspotential oder auf das Potential $V_{reset}$ legt, das auf das Bezugspotential bzw. die Masse bezogen ist, und von einer Gleichspannungsquelle 108 erzeugt wird, die zwischen einen der beiden Schalteranschlüsse des Schalters 106 und Masse geschaltet ist.

Die pixelspezifischen Steuersignale reset und select sowie das für alle Pixel gemeinsame Steuersignal shutter werden von einer Steuereinrichtung ausgegeben, die in Fig. 1 mit 110 angezeigt ist. Ferner ist in Fig. 1 angezeigt, dass die Gegenelektrode 102 des Pixels 100 zusammen mit der Photokathode 54 eine Kapazität $C_D$ bildet und dass das Ausgangssignal am Ausgang 104 des Pixels 100 im folgenden mit $U_{Signal}$ bezeichnet wird.

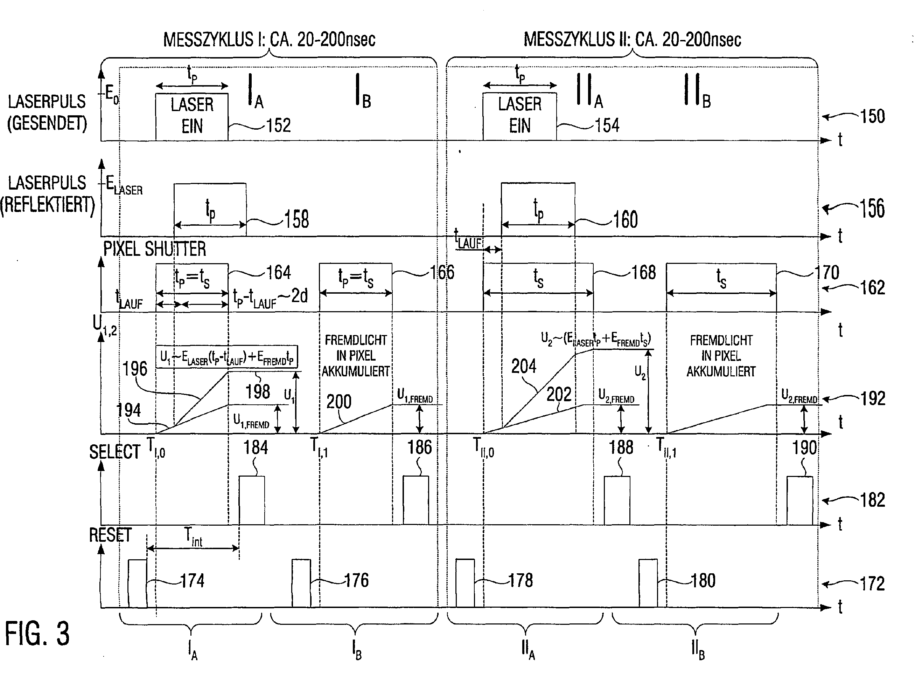

Wie es im folgenden Bezug nehmend auf Fig. 3 näher erörtert werden wird, ist der Transistor Q1 vorgesehen, um die Gegenelektrode 102 unmittelbar vor Beginn eines Erfassungszeitfensters positiv aufzuladen, indem derselbe die Gegenelektrode 102 auf das Potential $V_{reset}$ legt, während gleichzeitig der Schalter 106 die Photokathode auf Masse legt, welche Einstellungen die Steuereinrichtung 110 durch geeignete Einstellung der Steuersignale shutter und des pixelspezifischen Steuersignals reset erzielt. Hierdurch bildet sich eine Beschleunigungsspannung über Elektroden 54, 102 aus. Während des Erfassungszeitfensters trennt dann der Transistor Q1 die Gegenelektrode 102 von dem Potential $V_{reset}$. Die zu diesem Zeitpunkt über die Kapazität $C_D$ abfallende Beschleunigungsspannung nimmt dann während des Erfassungszeitfensters aufgrund der auf die Metallelektrode 102 auftreffenden Photoelektronen 68 ab. Am Ende eines Erfassungszeitfensters wird durch den Schalter 106 die Photokathode 54 auf das Potential $V_{reset}$ gelegt, wobei die nun anliegende Spannung über die Kapazität $C_D$ Photoelektronen 68 hinsichtlich eines Auftreffens auf die Gegenelektrode 102 entgegenwirkt und darüber hinaus ein Maß für die Lichtmenge ist, die auf den dem Pixel 100 entsprechenden Bereich der Photokathode 54 während des Erfassungszeitfensters eingefallen ist. Die Restspannung, in Fig. 1 mit $U_{1,2}$ bezeichnet, wird dann über die Transistoren Q2 und Q3 ausgelesen und von einer Auswerteeinheit verarbeitet, die in Fig. 1 nicht gezeigt ist, aber deren Funktionsweise im Hinblick auf Fig. 3 noch beschrieben wird.

Bezug nehmend auf Fig. 3 wird nun im folgenden die Funktionsweise des Abstandssensors 10 von Fig. 1 detailliert gemäß einem Ausführungsbeispiel beschrieben, bei dem der Abstandssensor 10 den Abstand d mittels vier unterschiedlicher, aufeinanderfolgender Erfassungszyklen erfasst, die sich in der Zeitdauer des Erfassungszeitfensters bzw. der Integrationszeit und hinsichtlich des Ein- bzw. Auszustands des Lasers 12 unterscheiden.

Fig. 3 stellt die vier Zyklen, im folgenden genauer als Subzyklen bezeichnet, dar. Insbesondere zeigt Fig. 3 die Zeitverläufe unterschiedlicher Signale, die in dem Abstandssensor 10 während dieser vier Subzyklen auftreten. Die Zeitverläufe sind in jeweils sechs Zeitdiagrammen untereinander dargestellt, bei denen die x-Achse der Zeit t in willkürlichen Einheiten entspricht. Die Zeitachsen aller sechs Zeitdiagramme zeigen den gleichen Zeitausschnitt, d.h. sind zueinander ausgerichtet. Mit geschweiften Klammern sind die erwähnten vier aufeinanderfolgenden Subzyklen angezeigt, die mit $I_A$, $I_B$, $II_A$ und $II_B$ in der Reihenfolge ihres Auftretens bezeichnet sind. Wie es in Fig. 3 oben zu sehen ist, werden die ersten beiden Subzyklen $I_A$ und $I_B$ im nachfolgenden auch manchmal zusammenfassend als Messzyklus I bezeichnet, der hier exemplarisch etwa 20-200 nsek dauert, während die beiden nachfolgenden Subzyklen $II_A$ und $II_B$ zusammenfassend mit Messzyklus II bezeichnet werden, der hier exemplarisch etwa ebenso lange, nämlich 20-200 nsek dauert.

In einem oberen der sechs Zeitdiagramme, das mit 150 angezeigt ist, ist der Zeitverlauf des von dem Laser 12 ausgegebenen Strahlungsflusses der Lichtleistung gezeigt, wobei die Lichtleistung in willkürlichen Einheiten entlang der y-Achse aufgetragen ist. Wie es zu sehen ist, wird der Laser 12 pulsartig ein- und ausgeschaltet. Die Pulszeitdauern betragen $t_p$. Die Lichtleistung während der Bestrahlungszeitfenster ist derart eingestellt, dass sie zu einer Bestrahlungsstärke $E_0$ in dem bestrahlten Bereich 24 des Objekts 20 führt. Außerhalb der Lichtpulse ist der Laser aus. In dem in Fig. 3 erfassten Zeitausschnitt sind zwei Laserimpulse 152 und 154 enthalten. Der Laserpuls 152 ist im Subzyklus $I_A$ enthalten, während der Laserpuls 154 im Subzyklus $II_A$ enthalten ist. In den Subzyklen $I_B$ und $II_B$ wird kein Laserpuls ausgegeben. Messzyklen I und II und damit auch die Laserpulse 152 und 154 werden mit einer vorbestimmten Wiederholzeitdauer zyklisch wiederholt.

Die abgestrahlten Laserpulse 152 und 154 von Fig. 3, die in Fig. 1 mit 30 angedeutet sind, treffen auf die Oberfläche des Objekts 20 und werden von dort aus wieder reflektiert und gelangen nach einer Laufzeitdauer $t_{Lauf}$ = $2 \cdot d/c_{Licht}$ zu der Erfassungseinrichtung 26. Der zeitliche Verlauf der an der Erfassungseinrichtung 26 an einem Pixel eintreffenden Lichtleistung ist in dem zweitobersten Zeitdiagramm 156 von Fig. 3 dargestellt, wobei die Lichtleistung in der y-Achse wiederum in willkürlichen Einheiten aufgetragen ist, und im folgenden davon ausgegangen werde, dass es sich bei dem Pixel um das Pixel 100 von Fig. 1 handele. Wie es zu sehen ist, treffen reflektierte Lichtpulse 158 und 160 mit einem Zeitversatz $t_{Lauf}$ ein und besitzen die gleiche Pulslänge $t_P$ wie die Pulslängen bei der Ausstrahlung. Im folgenden wird angenommen, dass die reflektierten Lichtpulse 158 und 160 an dem entsprechenden Pixel 100 aufgrund des Abstands d und der Reflektivität R des Objekts 20 zu einer Bestrahlungsstärke $E_{Laser}$ führe.

Bei einem dritten von oben dargestellten Zeitdiagramm 162 zeigt Fig. 3 den Zeitverlauf des Signals shutter, der zur Steuerung des Schalters 106 bzw. des Photokathodenpotentials dient. Das Signal Shutter ist bei 162 in willkürlichen Einheiten aufgetragen. Befindet sich das Signal Shutter 162 bei 162 auf der x-Achse, so befindet sich der Schalter 106 in der Stellung, die in Fig. 1 gezeigt ist, d.h. der Schalter 106 spannt die Photokathode 54 auf das Potential $V_{reset}$ vor. Andernfalls, d.h. wenn das Signal shutter bei 162 fern der x-Achse ist, befindet sich der Schalter 106 in der in Fig. 1 nicht dargestellten Stellung, d.h. die Photokathode 54 wird auf Masse gelegt. Die Zeitpunkte, da die Photokathode 54 auf Masse gelegt wird, stellen die Erfassungszeitfenster der Erfassungseinrichtung 26 dar. Wie es zu sehen ist, treten in den dargestellten vier Subzyklen vier Erfassungszeitfenster 164, 166, 168 und 170 auf, eines pro Subzyklus. Die Zeitdauer $t_s$ der Erfassungszeitfenster 164 und 166 der Subzyklen $I_A$ und $I_B$ sind gleich der Bestrahlungszeitdauer $t_P$, während die Erfassungszeitdauern $t_s$ der Erfassungszeitfenster 168 und 170 in den Subzyklen $II_A$ und $II_B$ größer als $t_P$ sind, und zwar vorzugsweise so groß, dass $t_s \geq t_P + t_{Lauf} + \Delta t$ für alle erlaubten bzw. zu erwartenden Abstände d gilt, wobei $\Delta t$ der Zeitversatz zwischen Bestrahlungszeitfenstern 152, 154 und Erfassungszeitfenstern 164, 168 angebe, der vorliegend exemplarisch Null ist. Die Erfassungszeitfenster 164 und Erfassungszeitfenster 164 und 168 aus den Messzyklen I bzw. II sind zu dem jeweiligen Laserpuls 152 bzw. 154 des Messzyklus derart synchronisiert, dass sie zu denselben ohne Zeitversatz beginnen, wobei die Synchronisation durch eine Synchronisationseinrichtung, die in den Fig. 1 - 3 nicht gezeigt ist, vorgenommen wird.

Das unterste unter den sechs Zeitdiagrammen von Fig. 3, das mit 172 angezeigt ist, stellt den Signalverlauf des Steuersignals reset für das vorliegend stellvertretend für die anderen Pixel betrachtete Pixel 100 dar. Auch das Signal reset ist stets auf einen von zwei logischen Zuständen eingestellt. In einem ersten Zustand, der in Fig. 3 bei 172 so dargestellt ist, dass der Signalverlauf von reset auf der x-Achse verläuft, trennt der Transistor Q1 die Elektrode 102 von dem Potential $V_{reset}$. In dem anderen logischen Zustand, der in Fig. 3 so dargestellt ist, dass das Signal reset fern der x-Achse ist, leitet der Transistor Q1, so dass die Elektrode 102 des Pixels 100 auf das Potential $V_{reset}$ vorgespannt wird. Die Zeitpunkte, in denen dies geschieht, sind in Fig. 3 mit 174, 176, 178 und 180 angezeigt. Sie treten immer unmittelbar vor den Erfassungszeitfenstern 174, 176, 168 und 170 auf oder zumindest in einer zeitlichen Nähe hierzu.

Das Zeitdiagramm 182 darüber stellt den Zeitverlauf des Steuersignals select für das vorliegend betrachtete Pixel 100 dar. Das Signal select nimmt stets ebenfalls lediglich einen von zwei logischen Zuständen ein, einen ersten, der in Fig. 3 daran zu erkennen ist, dass das Signal select auf der x-Achse liegt, und der andere dadurch, dass das Signal select fern der x-Achse ist. Im erstgenannten Fall sperrt der Transistor Q3, im letztgenannten Fall leitet der Transistor Q3, so dass, wie es noch erläutert werden wird, anhand des sich ergebenden Ausgangssignals $U_{Signal}$ auf die einfallende Lichtmenge auf das Pixel während des entsprechenden Erfassungszeitfensters 164-170 rückgeschlossen werden kann. Die Zeitpunkte, an denen der Transistor Q3 leitend geschaltet ist, sind in Fig. 3 mit 184, 186, 188 und 190 angezeigt. Sie folgen stets auf das Ende eines der Erfassungszeitfenster 164-170.

Wie in Fig. 1 gezeigt, werden die Signale shutter, select und reset, wie sie bei 162, 172 und 182 gezeigt sind, von der Steuereinrichtung 110 gesteuert. Sie steuert somit indirekt auch die zu den Erfassungszeitfenstern 164-170 synchronisierten Laserpulse 152-154. Durch die Signalverläufe von shutter, select und reset ergibt sich am Ende jedes Erfassungszeitfensters 164-170 während der entsprechenden Auslesephase 184-190 am Ausgang 104 ein Signal $U_{Signal}$, welches ein Maß für die auf das entsprechende Pixel aufgetroffene Lichtmenge während des jeweils vorausgegangenen Erfassungszeitfensters ist. Dies lässt sich folgendermaßen erklären. Die Metallelektrode 102 wird zu oder vor Beginn jedes Belichtungsvorganges 152, 154 über den Transistor Q1 mit dem Startpotential $V_{reset}$ vorgespannt (174-180). Anschließend wird der reset-Schalter $Q_1$ geöffnet. Gleichzeitig hierzu oder etwas später beginnt das Erfassungszeitfenster 164-170 durch legen der Photokathode auf Masse, wodurch sich die Beschleunigungsspannung ausbildet. Die einfallenden Elektroden 68 entladen dann die Kapazität $C_D$ solange, bis die Photokathode 54 am Ende der Erfassungszeitdauern 164-170 wieder deaktiviert wird, indem das Signal shutter so eingestellt wird, dass die Photokathode auf das Potential $V_{reset}$ vorgespannt wird. Über den Transistor Q3 wird dann das Signal nach einer bestimmten Zeitdauer $T_{int}$, die in etwa gleich der oder etwas größer als die Erfassungszeitfensterdauer $t_s$ ist, nach dem Ende des Rücksetzvorganges 174, 176, 178, 180 ausgelesen. Der Transistor Q2, der als Source-Folger geschaltet ist, puffert die über die Kapazität $C_D$ anliegende Restspannung $U_{1,2}$. Die räumliche Abstandserfassung wird erst durch die Anordnung der Pixel als Array und mittels synchroner Belichtung aller Empfangselemente bzw. Pixel durch das gemeinsame shutter-Signal an der Photokathode 54 möglich. Dieses Signal unterbricht den Elektronenstrom 68 zur Metallelektrode 102, so dass der Momentanwert der auf der Metallelektrode 102 akkumulierten lichtproportionalen Elementarladungen "eingefroren" wird.

Ist die Dauer des Shutter-Signal $t_s$ gleich der Pulsbreite $t_P$, wie es in den Subzyklen $I_A$ und $I_B$ der Fall ist, so repräsentiert die auf dem Kondensator $C_D$ liegende Spannung $U_1$ ein Maß für den Abstand d des Pixels von seinem korrespondierenden Bild- bzw. Objektpunkt in der Bildszene. Ist die Dauer des Shutter-Signals $t_s$ dagegen ausreichend größer als die Pulsbreite $t_p$, wie es in den Subintervallen $II_A$ und $II_B$ der Fall ist, so ist die Spannung $U_{1,2}$ nun ein Maß für die komplett akkumulierte Laserenergie. Dieser Umstand wird, wie es im folgenden noch näher erörtert werden wird, ausgenutzt, um pixelweise schwankende Reflektivitäten und pixelweise unterschiedliche Öffnungspupillen, die von dem jeweiligen Abstand d des dem Pixel entsprechenden Objektpunktes abhängen, zu kompensieren. In dem durch die Integration gewonnenen Messergebnis sind zusätzlich zum Abstand noch die Reflektanz r des belichteten Objektes, die Empfindlichkeit der Photokathode R und der quantitative Einfluss externer Störungen enthalten. Externe "Störungen" sind in diesem Zusammenhang insbesondere gegeben durch Fremdlichtanteile mit der Energie $E_{fremd}$, hervorgerufen durch unvermeidliche Einflüsse der Umgebungsbeleuchtung.

In dem noch verbliebenen Zeitdiagramm 192 ist in Fig. 3 schließlich der Zeitverlauf der Spannung $U_{1,2}$ dargestellt, und zwar wiederum in willkürlichen Einheiten und ohne Berücksichtigung des Vorzeichens. Genau genommen stellt das Zeitdiagramm 192 entlang der y-Achse einen zeitlichen Verlauf der akkumulierten Spannung über die Kapazität $C_D$ dar, die sich im Laufe jedes Erfassungszeitfensters 164 - 170 aufgrund des Photoelektroneneinfalls bildet und dann durch Abschalten der Beschleunigungsspannung einfroren wird.

Im Subzyklus $I_A$ des Messzyklus I, bei dem die Shutterzeitdauer $t_s$ gleich der Belichtungszeitdauer $t_p$ ist und ein Laserpuls 152 ausgegeben worden ist, akkumuliert sich auf einem betrachteten Pixel 100 vom Rücksetzzeitpunkt 174 an, genauer von Beginn des Erfassungszeitfensters 164 an, bis zum Eintreffen des reflektierten Pulses 158, d.h. über eine Zeitdauer von $t_{Lauf}$, lediglich störendes Hintergrundlicht. Genauer ausgedrückt führt in dieser Zeitspanne der Länge $t_{Lauf}$ lediglich störendes Hintergrundlicht zu Photoelektronen 68, die die Elektrode 102 entladen. Die Entladungskurve bei 192 ist deshalb in dieser Zeitspanne 194 zunächst flach. Sobald der reflektierte Puls 158 eingetroffen ist, trägt nicht nur das Hintergrundlicht, sondern auch das Nutzsignal, d.h. der reflektierte Puls 158, zur Photoelektronenerzeugung bei, und die Entladungskurve bei 192 steigt in diesem Zeitabschnitt, wie er bei 196 angezeigt ist, steiler an als bei 194. Dann, am Ende des Erfassungszeitfensters 164, wird die über die Kapazität $C_D$ anliegende Beschleunigungsspannung ausgeschaltet, indem der Schalter 106 die Photokathode mit Masse verbindet. Da keine Beschleunigungsspannung mehr anliegt, gelangen kaum noch Photoelektronen 68 zur Gegenelektrode 102, so dass die nach dem Umschalten des Schalters 106 über die Kapazität $C_D$ anliegende Spannung $U_1$ von da an im wesentlichen konstant bleibt bzw. eingefroren wird, wie es bei 198 angezeigt ist. Die Spannung $U_1$ liegt somit auch noch zu dem Zeitpunkt an, das der Transistor Q3 bei 184 leitend geschaltet wird, so dass sich am Ausgang 104 ein zu dem Spannungssignal $U_1$ proportionales Ausgangssignal $U_{Signal}$ ergibt. Die Spannung $U_1$ nimmt am Ende des Erfassungszeitfensters 164, nach Umschalten des Schalters 106, einen Wert $U_{1,Laser,fremd}$ an, für den gilt:

$$U_{1,Laser,fremd} = R \cdot r \cdot [E_{0,Laser} \cdot (t_P - t_{Lauf}) + E_{fremd} \cdot t_P] \qquad Gl. 1$$

wobei $E_{0,Laser}$ die Energie des Lasers bei Lichtimpuls 152 bzw. 152 sei, $E_{fremd}$ die Energie des Fremdlicht- bzw. Hintergrundlichtanteils, $t_P$ die Bestrahlungszeitdauer, die ja vorliegend gleich der Erfassungszeitdauer ist, $t_{Lauf}$ die Laufzeit des Lichtes, r die Reflektanz des belichteten Objekts 20 und R ein Maß für die Lichtempfindlichkeit der Photokathode 54 sei.

Gleichung 1 enthält einen laufzeitabhängigen und einen vom Fremdlicht abhängigen Anteil. Im Zyklus $I_B$ wird die Messung nun wiederholt, allerdings ohne Laserlicht. Da nun nur das Hintergrundlicht zur Photoelektronenbildung beiträgt, ist die Steigung der Entladungskurve beim Zyklus $I_B$ flach, wie es bei 200 gezeigt ist, nämlich so flach wie bei 194. Die sich am Ende des Erfassungszeitfensters 166 einstellende Restspannung $U_1=U_{1,fremd}$ an der Elektrode 102 entspricht

$$U_{1,fremd} = R \cdot r \cdot E_{fremd} \cdot t_P \qquad Gl. 2$$

Folglich enthält $U_{1,fremd}$ lediglich den Fremdlichtanteil und somit auch das bei 186 ausgelesene Signal $U_{Signal}$. Die Ergebnisse der Subzyklen $I_A$ und $I_B$ werden nun voneinander abgezogen, um den Fremdlichtanteil zu eliminieren. Es ergibt sich somit, die Proportionalität von $U_{Signal}$ außeracht lassend, für die Differenz:

$$U_{1,diff} = U_{1,Laser,fremd} - U_{1,fremd} = R \cdot r \cdot E_{Laser} \cdot (t_P - t_{Lauf}) \qquad Gl. 3$$

Die Differenzbildung kann freilich digital oder analog stattfinden. Ist die Halbleiterstruktur 60 jedoch in CMOS-Technik implementiert, so ist es zweckmäßigerweise möglich, die Analogsignals $U_{1,Laser, fremd}$ und $U_{1,fremd}$ direkt auf dem Chip bzw. der Halbleiterstruktur 60 mit sehr hoher Genauigkeit voneinander zu subtrahieren. Dies geschieht beispielsweise in einer sogenannten Schaltung zur korrelierten Doppelabtastung bzw. einer CDS- (CDS = correlated double sampling = korrelierte Doppelabtastung) Stufe.

Da die Messungen in den Subzyklen $I_A$ und $I_B$ zeitlich sehr nahe beieinander liegen, sind die Fremdlichtanteile zu nahezu 100% korreliert, weshalb Gleichung 3 in der geschriebenen Form gültig ist. Wie man erkennt, enthält Gleichung 3 keinen Fremdlichtanteil mehr. Allerdings sind noch die Reflektanz r, die von Bildpunkt zu Bildpunkt erheblich schwanken kann, und zwar im äußersten Fall für die Reflexion um beispielsweise einen Faktor von 1:40, und die Empfindlichkeit R der Photokathode, welche herstellungsbedingt von Pixel zu Pixel schwanken kann, enthalten. Diese Parameter werden, wie es im folgenden beschrieben wird, im Messzyklus II kompensiert. Während des Messzyklus II wird der Differenzwert $U_{1,diff}$ bzw. ein dazu proportionaler Wert im Kamerasystem gespeichert, da ja bei Subzyklus $II_A$ die Pixel sowie die oben erwähnte CDS-Schaltung für den nächsten Messzyklus zurückgesetzt werden.

Der Messzyklus II ist im wesentlichen identisch mit dem Messzyklus I bis auf die Dauer $t_S$ des Shutter-Signals 162: Das Shutter-Zeitfenster ist jetzt deutlich länger als die Dauer $t_P$ des Laserpulses 154, so dass die gesamte Pulsform des Lasers im Pixel aufintegriert wird. Damit ist keine Abstandsinformation d mehr in dem Signal $U_1$ enthalten, weil diese gerade durch das "Abschneiden" des empfangenen Laserpulses mittels des Shutter-Signal gewonnen wird.

Im Subzyklus $II_A$ akkumulieren sich somit über die Zeitdauer $t_S$ zunächst einmal die durch das Hintergrundlicht erzeugten Photoelektronen. Dieser Anteil ist mit der gestrichelten Linie bei 202 angezeigt. Während der Zeit, da der reflektierte Lichtpuls 160 eintrifft, welcher Zeitabschnitt sich vollständig in dem Zeitfenster 168 befindet, werden zusätzlich Photoelektronen durch den reflektierten Laserpuls 160 erzeugt, weshalb die Steigung der tatsächlichen Entladungskurve beim Subzyklus $II_A$ während dieser Zeit größer als der Beitrag des Fremdlichtanteils 202 ist, wie es bei 204 angezeigt ist. Am Ende des Erfassungszeitfensters 168 wird deshalb nach Umschalten des Schalters 106 auf Masse eine Spannung $U_2$ am Kondensator $C_D$ eingefroren, für die gilt:

$$U_{2,Laser,fremd} = R \cdot r \cdot \left( E_{Laser} \cdot t_P + E_{fremd} \cdot t_S \right) \qquad \text{Gl. 4}$$

Wie bei dem Messzyklus I wird dann der Messzyklus II der Subzyklus $II_A$ im Subzyklus $II_B$ wiederholt, diesmal jedoch ohne Nutzsignal bzw. Laserpuls, so dass nicht wie im Subzyklus $II_A$ Laser- und Hintergrundanteil aufgenommen werden, sondern nun nur der Fremdlichtanteil, so dass sich am Ende des Erfassungszeitfensters 170 über die Kapazität $C_D$ eine Spannung $U_{2,fremd}$ ergibt, für die gilt:

$$U_{2,fremd} = R \cdot r \cdot E_{fremd} \cdot t_S \qquad \text{Gl. 5}$$

Abermals werden die beiden Werte beispielsweise in vorerwähnter CDS-Stufe einer Differenzbildung unterzogen, so dass sich der Wert $U_{2,diff}$ bzw. ein dazu proportionaler Wert ergibt, nämlich

$$U_{2,diff} = U_{2,Laser,fremd} - U_{2,fremd} = R \cdot r \cdot E_{Laser} \cdot t_P \qquad \text{Gl. 6}$$

Die beiden vorerwähnten Differenzbildungen werden in einer Auswerteeinheit durchgeführt, die in den Figuren nicht gezeigt ist und die gegebenenfalls vorerwähnte CDS-Stufe aufweist. Die Auswerteeinheit bildet nun den Quotienten aus den Ergebnissen aus Gleichung 3 und Gleichung 6, wodurch sich ergibt:

$$\frac{U_{1,diff}}{U_{2,diff}} = \frac{\left( t_P - t_{Lauf} \right)}{t_P} \qquad \text{Gl. 7}$$

Unter Verwendung des Zusammenhangs $t_{Lauf} = 2 \cdot d / c_{Licht}$ und unter der Voraussetzung, dass die Laserquelle 12 sowie die Erfassungseinrichtung 26 die gleiche Entfernung d zum Objekt 20 besitzen, gilt schließlich für den Abstand $d_{x,y}$ des jeweils betrachteten Pixels (x, y), wobei x und y beispielsweise einen Zeilen- bzw. Spaltenindex angeben, von seinem korrespondierenden Objektpunkt 20a-20c in der Szene:

$$d_{x,y} = \frac{c_{Licht}}{2} \cdot t_p \cdot \left(1 - \left(\frac{U_{1,diff}}{U_{2,diff}}\right)_{x,y}\right) \qquad \text{Gl. 8}$$

Eine Auswerteeinrichtung, die die sich in den Subzyklen $I_A$ - $II_B$ ergebenden Ausgangssignale gemäß der Gleichungen 3, 6, 7 und 8 verarbeitet, in den Figuren aber nicht gezeigt ist, gelangt folglich für alle Pixel an Pixelpositionen, d.h. für jede Pixelzeile x und jede Pixelspalte y, in welchen die Pixel angeordnet sind, zu einem Abstandswert $d_{x,y}$, der hintergrundlichtkompensiert und reflektanzkompensiert ist.

Um die Empfindlichkeit zu erhöhen und damit die Abstandsauflösung zu steigern, können die Messzyklen I und II jeweils mehrmals hintereinander ausgeführt werden, wobei derweil die Differenzen $U_{1,diff}$ und $U_{2,diff}$ aufaddiert und jeweils im Analogspeicher auf dem Chip abgelegt werden. Bei N Zyklen des Zyklus I verbessert sich damit die Abstandsauflösung $\Delta d$ um den Faktor Wurzel(N). Der Vollständigkeit halber sei erwähnt, dass die Laserenergie quadratisch mit dem Abstand d von der Laserquelle 12 abnimmt, was die Anforderungen an die Mehrpulsfähigkeit des Systems enorm erhöht.

Ferner wird Bezug nehmend auf die Beschreibung von Fig. 3 noch darauf hingewiesen, dass neben den Fremdlichtanteilen und der Reflektanz gleichzeitig auch Dunkelstromanteile und tieffrequente Rauschanteile, die vom Halbleitersubstrat bzw. CMOS-Sensor 60 herrühren, kompensiert werden, da sie durch die unmittelbare Messung nach der Beleuchtung mit der Laserquelle noch korreliert sind.

Ergänzend dazu bietet nun das nachfolgend beschriebene Ausführungsbeispiel durch eine Bildverstärkungsanordnung die Möglichkeit, in Verbindung mit einer MCP den Elektronenstrom zu verstärken und auf diese Weise den Signalrauschabstand und damit die Abstandsauflösung zu erhöhen.

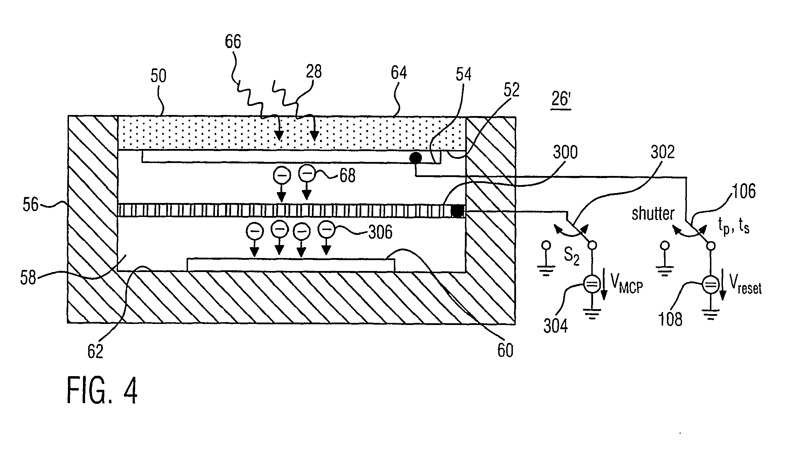

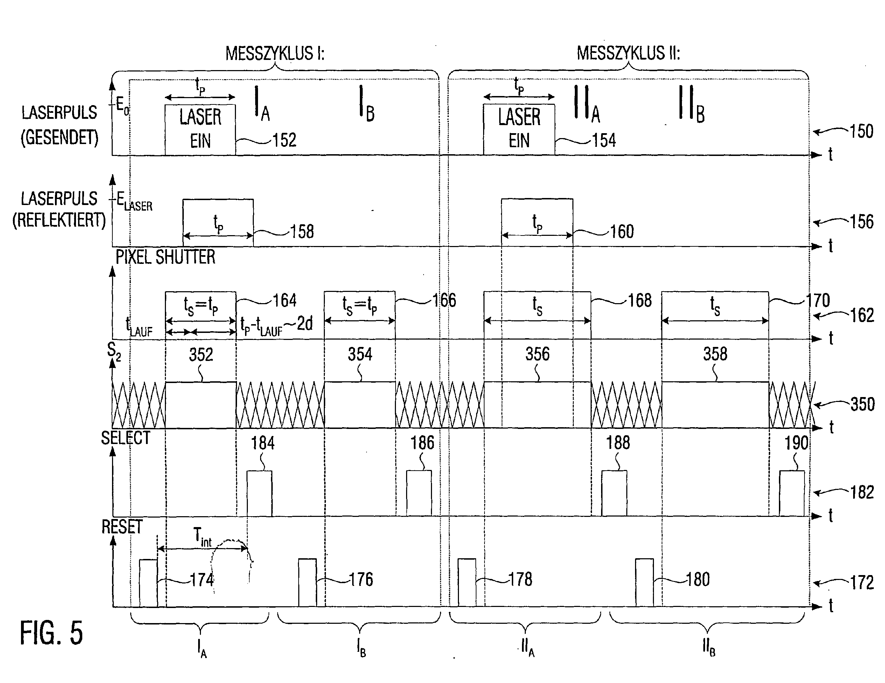

Nachfolgend wird Bezug nehmend auf die Fig. 4 und 5 ein Ausführungsbeispiel der vorliegenden Erfindung beschrieben, das sich von dem Ausführungsbeispiel der Fig. 1 - 3 in der Ausgestaltung der Erfassungseinrichtung 26 und genau genommen in der Hinzufügung einer MCP unterscheidet, so dass die Erfassungseinrichtung 26 als Bildverstärker wirkt.

Die zu Fig. 2 veränderte Erfassungseinrichtung ist in Fig. 4 mit 26' dargestellt. Sie ist im Aufbau grundsätzlich identisch mit dem Aufbau der Erfassungseinrichtung von Fig. 2, mit der Ausnahme, dass sich ein Elektronenvervielfacher in der Form einer MCP (Micro Channel Plate) bzw. einer Mikrokanalplatte 300 in dem Hochvakuum 58 zwischen der Photokathode 54 und dem Halbleitersubstrat 60 befindet. In Fig. 4 dargestellt ist auch der Schalter 106, der gesteuert über das Steuersignal shutter in Erfassungszeitdauern der Länge $t_s$ bzw. $t_p$ dafür sorgt, dass eine Beschleunigungsspannung zwischen Halbleiterstruktur 60 und Photokathode 54 anliegt und dazwischen nicht. Für die MCP 300 existiert ein Schalter 302, der durch ein Steuersignal $S_2$ gesteuert wird, das ebenfalls durch die Steuereinrichtung 110 erzeugt wird, die in Fig. 4 der Übersichtlichkeit halber jedoch nicht gezeigt ist. Gesteuert durch das Steuersignal $S_2$ schaltet der Schalter 302 die MCP 300 wahlweise entweder auf Masse oder spannt dieselbe auf ein Potential $V_{MPC}$ vor, wie es von einer Gleichspannungsquelle 304 erzeugt wird, die zwischen Masse und einen jeweiligen Schalteranschluss des Schalters 302 geschaltet ist.

Der Elektronenvervielfacher 300 in Form der MCP hat die Wirkung, dass, wenn die Spannung $V_{MCP}$ an dem MCP 300 anliegt, die von der Photokathode 54 abgegebenen und zu den Gegenelektroden der Halbleiterstruktur 60 hin beschleunigten Photoelektronen 68 auf die MCP 300 auftreffen, die daraufhin für jedes Elektron ein der Spannung $V_{MCP}$ entsprechendes Vielfaches bzw. eine der Spannung $V_{MCP}$ entsprechende Anzahl von Sekundärelektronen 306 ausgibt. Die Abhängigkeit der Anzahl von der Spannung $V_{MCP}$ ergibt sich aus der größeren Beschleunigung der Primärelektronen 68 bei größerer Spannung $V_{MCP}$.

Der Sekundärelektronenvervielfacher 300 in Form der MCP kann ebenfalls als "Photo"-Gate mit Shutter-Funktion verwendet werden, wie es aus Fig. 5 deutlich werden wird. Fig. 5 stellt ein Ausführungsbeispiel eines Messablaufs dar, der demjenigen von Fig. 3 entspricht, sich jedoch von demjenigen von Fig. 3 dadurch unterscheidet, dass anstelle der Erfassungseinrichtung 26 von Fig. 2 in dem Abstandssensor von Fig. 1 die Erfassungseinrichtung bzw. der Bildverstärker 26' von Fig. 4 verwendet wird. Fig. 5 stellt den Messablauf entsprechend Fig. 3 durch Zeitverläufe von Signalen dar. In den Zeitverläufen, in denen der Messablauf nach Fig. 5 mit dem Messablauf von Fig. 3 übereinstimmt, sind gleiche Bezugszeichen verwendet worden. Wie es zu erkennen ist, stimmt der Messablauf in den Signalen reset, select, shutter sowie in der Ansteuerung des Lasers überein. In Fig. 5 wurde das sich an den Pixeln ergebende Entladeverhalten nicht dargestellt, da es im wesentlichen demjenigen von Fig. 3 entspricht bzw. sich lediglich in einer höheren Steigung der Entladekurve niederschlägt, da ja jedes Primärelektron 68 zu einem oder mehreren Sekundärelektronen 306 führt.

In einem Zeitdiagramm 350 zeigt Fig. 5 jedoch den zeitlichen Verlauf des Signals $S_2$, mit welchem der Schalter 302 angesteuert wird. Befindet sich bei 350 das Signal $S_2$ an der x-Achse, so ist der Schalter 302 an der in Fig. 4 nicht dargestellten Stelle, so dass die MCP 300 gesperrt ist. Zu den anderen Zeitpunkten, die bei 350 dadurch angezeigt sind, dass das Signal S$_2$ fern der x-Achse ist, und die in Fig. 5 mit 352, 354, 356 und 358 angezeigt sind, befindet sich der Schalter 302 in der in Fig. 4 dargestellten Stellung, so dass an der MCP 300 die Spannung 304 anliegt. Die Zeitpunkte 352 - 358, an denen die Spannung V$_{MCP}$ an der MCP 300 anliegt, decken sich mit bzw. sind zeitgleich zu den Erfassungszeitfenstern 164-170. Die MCP 300 wirkt somit als "Photo"-Gate mit Shutter-Funktion. Steht der Schalter S$_2$ in Stellung "Masse", so ist die MCP 300 gesperrt, der Elektronenfluss zur Halbleiterstruktur 60, die beispielsweise ein CMOS-Sensor ist, ist so unterbrochen. In der Stellung "V$_{MCP}$" wird die Verstärkung durch die Justierung der Spannung V$_{MCP}$ eingestellt. MCP's besitzen Verstärkungen von 1:1 Million und mehr. Demgemäss kann V$_{MCP}$ je nach Bauart des Bildverstärkermoduls 10 Volt und mehr betragen. Bei einer Verstärkung k$_{MCP}$ der MCP 300 werden aus einem Elektron 68 am Eingang der MCP 300, d.h. an der der Photokathode 54 zugewandten Seite der MCP 300, k$_{MPC}$ Elektronen 306 am Ausgang, d.h. der dem Halbleitersubstrat 60 zugewandten Seite der MCP 300, erzeugt und von den Pixelstrukturen in dem Halbleitersubstrat 60 detektiert. Damit werden die Rauschanteile des beispielsweise als CMOS-Sensor implementierten Halbleitersubstrats 60 und des gesamten Abstandmeßsystems 10 in erster Näherung um den Faktor Wurzel (k$_{MCP}$) im Messergebnis reduziert.

Das Rauschen des Hintergrundlichts ist durch die zeitliche Dauer des Signals Shutter gegeben, d.h. durch t$_P$. Je kürzer t$_P$ ist, desto geringer ist der Anteil des Hintergrundlichtrauschens im Messsignal. Zur weiteren Rauschreduktion könnte das Mehrpulsverfahren verwendet werden.

In bezug auf die vorhergehende Beschreibung wird darauf hingewiesen, dass im Vorhergehenden nicht besonders darauf eingegangen wurde, dass die Photokathode 54 für ein breiteres Spektrum "empfindlich" sein bzw. auf ein weiteres Spektrum Photoelektronen ausgeben kann als das Spektrum der verwendeten Strahlungsquelle 12. Deshalb wird gemäß einem Ausführungsbeispiel der vorliegenden Erfindung die Photokathode 54 durch ein Halbleitermaterial gebildet, das durch spezielle Fremdatome dotiert wird. Durch spezielle Wahl der Fremdatome ist die Photokathode 54 dann nur in sehr schmalen Wellenlängenbereichen empfindlich bzw. gibt nur in diesen sehr schmalen Wellenlängenbereichen Photoelektronen aus, die dann in dem Spektrum der Lichtquelle 12 liegen bzw. dasselbe überschneiden sollten. Die Selektivität, die hierdurch erzielt wird, kann sogar besser sein als bei optischen Filtern, die jedoch freilich ebenfalls hierzu verwendet werden könnten, wie z.B. indem sie gleichzeitig als Eingangsfenster 50 dienen.

Fig. 6 zeigt einen verglichen zu Fig. 4 variierten Bildverstärker 26". Der Bildverstärker von Fig. 6 unterscheidet sich im wesentlichen von demjenigen von Fig. 4 dadurch, dass das Gehäuse 56 nicht nur eine vordere Öffnung aufweist, die durch das Eingangsfenster 50 abgeschlossen ist, sondern dass dasselbe ferner auf der gegenüberliegenden Seite geöffnet ist. Die Öffnung auf der gegenüberliegenden Seite ist durch eine Schichtfolge aus Photoschirm 370, Ausgangsfenster 372 und Halbleiterstruktur 374 abgeschlossen, die den Boden des Gehäuses 56 bildet. Eingangsfenster, Gehäuse 56 und Ausgangsfenster 372 bilden somit wiederum eine Vakuumkammer 58.

Im Unterschied zu den Ausführungsbeispielen von Fig. 2 und 4 werden die Photoelektronen 68, die aus der Photokathode 54 herausgelöst werden, oder die Sekundärelektronen, die von der MCP 300 erzeugt werden, unmittelbar detektiert, sondern es erfolgt eine erneute Umwandlung des Elektronenin einen Photonenstrom, indem die von der MCP 300 ausgegebenen Sekundärelektronen 306 in dem beispielsweise auf dem Ausgangsfenster 372 auf der der MCP 300 zugewandten Seite desselben aufgedampften Phosphorschirm 370 wieder in Photonen 376 umgewandelt werden, die dann durch das Ausgangsfenster 372 zu einem in der Halbleiterstruktur 374 gebildeten CCD- oder CMOS-Photodiodenarray gelangen. Hinter dem Phosphorschirm 370 kann optional auch eine Glasfaseroptik angeordnet sein, welche das Licht bzw. den Photonenstrom auf einen anderswo angeordneten CCD- oder CMOS-Bildsensor 374 leitet. Mit entsprechenden Shutter- bzw. Erfassungszeitfenstereinstellungen können mit dem Bildverstärker 26" die gleichen Messabläufe wie bei Fig. 5 realisiert werden.

Es wird darauf hingewiesen, dass der Abstandssensor 10 ferner eine 3D-Kamera bilden kann, die neben der im Vorhergehenden beschriebenen 3D-Bildaufnahmefunktion ferner auch die Fähigkeit besitzt, normale Bildaufnahmen, d.h. 2D-Bildaufnahmen, zu erzeugen, so dass farbige oder schwarzweiße Bilder erzeugt werden können.

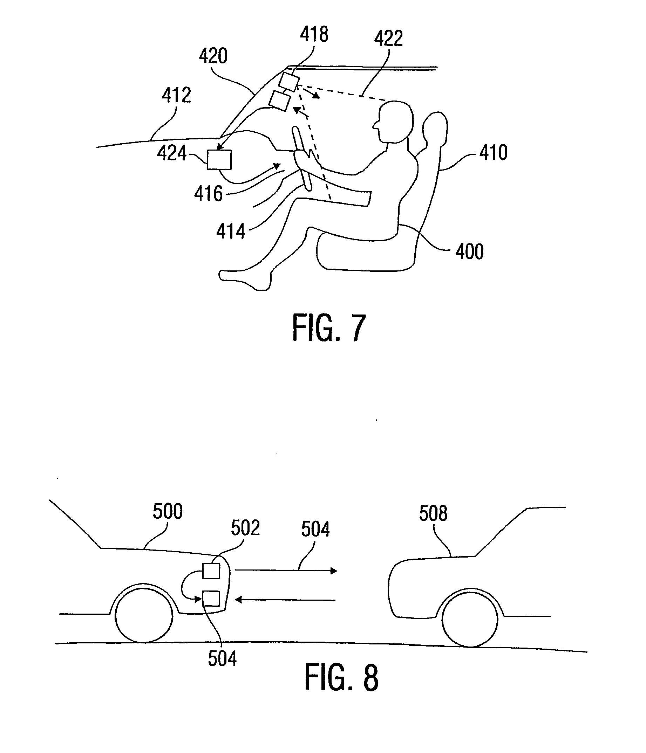

Fig. 7 zeigt eine Einsatzmöglichkeit der im Vorhergehenden beschriebenen Abstandssensoren. Fig. 7 stellt einen Autofahrer 400 während der Fahrt dar. Er sitzt am Fahrersitz 410 und lenkt ein Auto 412 über ein Lenkrad 414, in welchem ein Airbag 416 auslösebereit eingebaut ist. Der Abstandssensor, der nach einem der vorhergehenden Ausführungsbeispiele gebildet sein kann, ist mit 418 angezeigt und ist als oberhalb der Windschutzscheibe 420 angebracht dargestellt, wobei jedoch auch andere Positionen denkbar sind. Der Abstandssensor 418 erzeugt eine 3D-Bildaufnahme bzw. eine 3D-Bildaufnahmesequenz eines durch gestrichelte Linien 422 dargestellten Bildausschnitts, der den Fahrer 400 umfasst. Die 3D-Bildinformationen gelangen zu einer Auswerteeinheit 424, die die Abstandsbilder d$_{x,y}$ ständig daraufhin untersucht, wie nah sich der Fahrer 400 an dem Sensor 418 befindet, was dann beispielsweise als Maß dafür genommen wird, wie nah sich der Fahrer 400 zu dem Airbag 416 befindet. Die Auswerteeinrichtung 424 berechnet beispielsweise das Raumvolumen zwischen Sensor 418 und Fahrer 400 im Erfassungsraumwinkelsegment und verwendet dies als Maß für den Abstand zwischen Fahrer 400 und Airbag 416. Bei einem Aufprall bzw. Unfall steuert dann die Auswerteeinrichtung 424 den Airbag 416 derart an, dass der Airbag 416 in Abhängigkeit vom Abstand des Fahrers 400 mit verzögerter Stärke ausgelöst wird, nämlich später, wenn sich der Fahrer 400 weiter entfernt zum Airbag 416 befindet. Der in Fig. 7 schematisch dargestellte Fall ist lediglich exemplarisch. Freilich kann der 3D-Sensor 418 auch zur Airbag-Auslösung eines zweiten Airbags oder eines Airbags für einen anderen Fahrgast als den Fahrer 400 verwendet werden. Zudem kann die Anordnung zwischen Sensor 418, Fahrer 4400 und Airbag 416 anders gewählt werden.

Fig. 8 zeigt ein weiteres Ausführungsbeispiel, bei welchem ein Abstandssensor nach den Fig. 1 - 6 eingesetzt werden könnte. Fig. 8 zeigt ein Auto 500, an dessen Frontpartie der 3D-Sensor 502 angebracht ist, um in Fahrtrichtung 504 des Autos 500 3D-Bildaufnahmen zu erzeugen. Eine Auswerteeinrichtung 504 erhält die Bildinformationen und entscheidet anhand derselben, ob sich in Fahrtrichtung 504 vor dem Auto 500 ein Auto befindet, und falls ja, welcher Fall in Fig. 8 durch ein Auto 508 dargestellt ist, ob sich dasselbe näher als ein zugelassener Mindestabstand vor dem Auto 500 befindet, in welchem Fall die Auswerteeinrichtung 506 beispielsweise ein Signal an den Fahrer ausgibt oder die Motorleistung reduziert oder das Auto 500 aktiv bremst.

Bei beiden Einsatzgebieten von Fig. 7 und 8 ist der 3D-Sensor 418 bzw. 502 ohne weiteres an die jeweiligen Probleme im Einzelfall anpassbar. In dem Fall von Fig. 7 und Fig. 8 beträgt der bevorzugte Wellenlängenbereich, in welchem die Lichtquelle Licht ausstrahlt, d.h. das Spektrum der Lichtquelle, von 900nm bis 1200nm und noch mehr bevorzugt von 1500nm bis 2000nm Dieser Arbeitswellenlängenbereich verhindert eine Gefährdung des Auges des Fahrers 400 in dem Fall von Fig. 7 bzw. schließt eine Fehlfunktion durch Nebel oder Regen bei der Abstandskontrolle nach Fig. 8 aus.

Es wird darauf hingewiesen, dass obige Ausführungsbeispiele in mehrerer Hinsicht variiert werden können. Die photoelektrisch erzeugten Elektronen 68 können beispielsweise anders als in den Ausführungsbeispielen von Fig. 2, 4 und 6 dargestellt erfasst werden. So können im Pixel noch zusätzliche Elektroden angeordnet sein, welche die eigentliche detektierende Elektrode umschließen und den Elektrodenstrahl auf die Pixelmitte fokussieren durch Wahl entsprechender Potentiale. Ferner wäre die vorliegende Erfindung auch als einfacher Abstandssensor denkbar, bei dem quasi nur ein Pixel vorliegt. Das Array selbst könnte anders als in Spalten und Zeilen geordnet sein. Ferner können verschiedene Variationen im Hinblick auf die Synchronisation zwischen Erfassungszeitfenstern und Bestrahlungszeitfenstern vorgenommen werden. Beispielsweise muss die Länge dieser Zeitfenster in dem eigentlichen abstandserfassenden Zyklus $I_A$ nicht unbedingt gleich sein. $t_P$ könnte in $I_A$ beispielsweise auch größer oder kleiner als die Erfassungszeitdauer $t_s$ sein, solange sich nur in den relevanten Abstandsbereichen ein Abschneiden des einen oder des anderen Fensters ergibt. Ferner könnte zwischen Erfassungszeitfenster und zugeordnetem Bestrahlungszeitfenster ein Zeitversatz vorgesehen sein, der aber kleiner als $t_{Lauf}$ für den minimalen Abstand d sein sollte. Die im vorhergehenden nicht gezeigte Auswerteinrichtung könnte zusammen mit der Steuereinrichtung 110 mittels eines Microcontrollers und einer entsprechenden Software implementiert sein.

Die vorhergehenden Ausführungsbeispiele stellen somit ein Detektionsprinzip dar, bei dem eine Detektorstruktur in der Lage ist, die Wellenlänge des Pulslichts aus dem sichtbaren Bereich heraus zu verschieben, wodurch das Problem der Augensicherheit gelöst ist. Die Shutter-Zeitfenster können verkürzt werden, wodurch der Hintergrundlichtanteil minimiert wird, und die Energie des auftretenden Lichtpulses kann verstärkt werden, wodurch die Pulszahl bei Mehrfachakkumulation reduziert werden kann. Des weiteren ermöglichen obige Ausführungsbeispiele eine Abstandsmessung in örtlich hochaufgelöster Form, da aufgrund der Elektronenvervielfachung die Pixel sehr viel empfindlicher und somit kleiner ausgelegt werden können, verglichen mit existierenden 3D-Pixeln, deren Empfindlichkeit direkt von der lichtempfindlichen Fläche der Photodiode abhängt.

Obige Ausführungsbeispiele verwenden Bildverstärker als Sensorelemente und keine Photodioden. Die Bildverstärker können auch bei langwelligem Pulslicht außerhalb des sichtbaren Bereichs betrieben werden. Damit sind die Anforderungen an die Augensicherheit entschärft, da man für Lichtwellenlängen, die für das menschliche Auge nicht sichtbar sind, viel höhere Pulsenergien zur Distanzmessung verwenden kann. Darüber hinaus sind bestimmte Flüssigkeitsmedien, wie z.B. Blut, Gewebswasser, Nebel, Feuchtigkeit, Rauch und ähnliches, transparent für langwelliges Licht im Mikrometerwellenlängenbereich. Hier öffnen sich somit neue Applikationsfelder für die 3D-Abstandsmeßsensorik und die Bildaufnahmen mit langwelligem Licht allgemein. Konkret besäßen beispielsweise Kfz-Abstandskameras in Nebel- oder Regensituationen die Fähigkeit, sicher den Abstand zum vorausfahrenden Fahrzeug einzuhalten. Momentan existierende 3D-Meßsysteme, welche bei sichtbarem Laserlicht mit ca. 900 nm Wellenlänge arbeiten, würden eine sehr viel höhere Pulsleistung benötigen, um zuverlässig den Abstand bestimmen zu können, was sich aus Gründen der Augensicherheit verbietet.

Aufgrund der bei Photokathoden sehr viel kürzer einstellbaren Shutter-Zeiten bis hinunter in den Pikosekundenbereich wird der Hintergrundlichtanteil im Messsignal minimiert. Wird nun die auf die Breite des Shutter-Fensters entfallende Laserenergie durch Erhöhung der abgestrahlten Pulsleistung konstant gehalten, steigt der Störabstand zwischen Laser- und Hintergrundlicht. Im Vergleich zu den bisher existierenden Applikationen (Shutter-Zeiten im Nanosekundenbereich) ist die Verbesserung des Störabstands durch das Verhältnis der Shutter-Zeiten gegeben. Bei Verwendung eines Bildverstärkers mit Sekundärelektronenvervielfacher (MCP) wird die Energie der aus dem Lichtpuls erzeugten Elektronen noch einmal zusätzlich im Modul verstärkt, was den SignalRauschabstand zum Rauschen der Sensor/Systemelektronik erhöht. Zusammenfassend ist festzuhalten, dass mittels der hier vorgestellten Signal verarbeitungsmethode das Rauschen des Hintergrundlichts reduziert und der Rauschabstand bezogen auf das Sensorsystem erhöht wird.

Die mit Bilderverstärkern aufgenommenen Distanzwerte liegen in lateral sehr viel höher aufgelöster Form vor, da durch die sehr klein auslegbare Metallelektrode die Kantenlänge der Pixel je nach Prozess weniger als 10 $\mu$m beträgt. In einem 0,5-$\mu$m-Standard-CMOS-Fertigungsprozess lassen sich damit sehr große Matrizen mit 1 Million und mehr Pixeln realisieren. Im Vergleich dazu sind mit existierenden 3D-Pixeln nur bis zu ca. 1.000 Pixel bei einer Kantenlänge von 200 - 300 $\mu$m integrierbar, da ihre Empfindlichkeit direkt von der lichtempfindlichen Fläche der Photodiode abhängt. Die erreichbare laterale Auflösung ist damit um ein Vielfaches geringer als bei dem hier durch die vorhergehenden Ausführungsbeispiele vorgestellten Schaltprinzip. Hier eröffnen sich mannigfache Applikationen im Bereich der professionellen Photographie, der Film/Fernseh-, Studio- bzw. Aufnahmetechnik, der Überwachungssensorik, in Smart-Office-Anwendungen u.v.m.

Unter anderem bietet auch die Medizintechnik eine Fülle von Anwendungsmöglichkeiten für obige Ausführungsbeispiele. Durch die Verwendbarkeit hoher Wellenlängen des Laserlichts lassen sich Videoendoskope blend- und absorptionsfrei durch beispielsweise Blutbahnen manövrieren, da Blut für langwelliges Licht transparent ist. Zur Signalübertragung könnte beispielsweise das Ausführungsbeispiel von Fig. 6 verwendet werden, wenn dasselbe um einen Lichtleiter zwischen Phosphorschirm und Halbleitersubstrat erweitert wird. Damit würden Operationstechniken an pulsierenden Organen möglich, da das Kamerasystem nicht mehr durch die Strömung der Gewebsflüssigkeit bzw. des Blutes irritiert würde.

Insbesondere wird darauf hingewiesen, dass abhängig von den Gegebenheiten das erfindungsgemäße Schema zur Abstands- bzw. Entfernungsmessung auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner und/oder einem entsprechenden Digital- oder Analogbaustein abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Abstandssensor zur Erfassung eines Abstands zu einem Objektpunkt (20a, 20b, 20c), mit
   einer elektromagnetischen Strahlungsquelle (12) zur Bestrahlung des Objektpunkts (20a, 20b, 20c) mit einem Strahlungspuls (30) in einem Bestrahlungszeitfenster (152);
   einer Erfassungseinrichtung (26) zur Erfassung von von dem Objektpunkt reflektierter elektromagnetischer Strahlung (28, 66) in einem Erfassungszeitfenster (164), das in vorbestimmter zeitlicher Beziehung zu dem Bestrahlungszeitfenster (152) steht, wobei die Erfassungseinrichtung (26) folgende Merkmale aufweist:

   eine Photoelektrode (54) zum, gemäß dem äußeren Photoeffekt, Abgeben von Photoelektronen (68) auf die reflektierte elektromagnetische Strahlung (28, 30) hin; und
   einen Elektronendetektor (60; 300; 370, 374) zum Umwandeln der abgegebenen Photoelektronen (68) in ein Erfassungssignal ($U_{signal}$), das eine Menge der von dem Objektpunkt (20a, 20b, 20c) reflektierten elektromagnetischen Strahlung (28, 30) anzeigt; und

   eine Auswerteeinrichtung zur Ermittlung des Abstands (d) zu dem Objektpunkt (20a, 20b, 20c) aus dem Erfassungssignal ($U_{signal}$), wobei die Erfassungseinrichtung (26) ferner folgende Merkmale aufweist:

   eine Gegenelektrode (102), die zusammen mit der Photoelektrode (54) eine Kapazität ($C_D$) bildet;
   eine Einrichtung ($Q_1$) zum Verbinden der Gegenelektrode (102) mit einem vorbestimmten Potential ($V_{reset}$) vor dem Erfassungszeitfenster (164) und zum Trennen derselben von dem vorbestimmten Potential ($V_{reset}$) während des Erfassungszeitfensters (164), so dass die Kapazität ($C_D$) während des Erfassungszeitfensters (164) entladen wird; und
   eine Einrichtung (106) zum Verbinden der Photoelektrode (54) mit Masse während des Erfassungszeitfensters (164) und mit dem vorbestimmten Potential ($V_{reset}$) im Anschluss an das Erfassungszeitfenster (164) ; und
   eine Einrichtung ($Q_2$, $Q_3$) zum Auslesen einer über die Kapazität ($C_D$) abfallenden Spannung nach dem Erfassungszeitfenster (164), um das Erfassungssignal zu erhalten.

2. Abstandssensor gemäß Anspruch 1, bei dem der Elektronendetektor (300; 370, 374) folgende Merkmale aufweist:

einen Elektronenvervielfacher (300) zum Ausgeben einer Anzahl von Sekundärelektronen (306) ansprechend auf die ausgegebenen Photoelektronen (68), wobei die Anzahl von Sekundärelektronen (306) einem Vielfachen einer Anzahl der Photoelektronen (68) entspricht; und

einem Elektronenakkumulator (60, 54, 102) zum Akkumulieren der Sekundärelektronen (306) innerhalb des Erfassungszeitfensters (164); und

einer Schaltung (100) zum Generieren des Erfassungssignals in Abhängigkeit von den innerhalb des Erfassungszeitfensters (164) akkumulierten Sekundärelektronen (306).

3. Abstandssensor gemäß Anspruch 2, bei dem der Elektronenakkumulator (60, 54, 102) eine Gegenelektrode (102) umfasst, die zusammen mit der Photoelektrode (54) eine Kapazität ($C_D$) bildet, wobei der Elektronenvervielfacher (300) zwischen Gegenelektrode (102) und Photoelektrode (54) angeordnet ist.

4. Abstandssensor gemäß Anspruch 2 oder 3, bei dem der Elektronenvervielfacher (300) steuerbar ist, um in einem ersten Zustand keine Sekundärelektronen (306) und in einem zweiten Zustand ein Vielfaches der Photoelektronen (68) an Sekundärelektronen (306) auszugeben, und der ferner folgendes Merkmal aufweist:

eine Einrichtung (110) zum Steuern des Elektronenvervielfachers (300), um denselben während des Erfassungszeitfensters (164) in den zweiten Zustand und davor und danach in den ersten Zustand zu versetzen.

5. Abstandssensor gemäß einem der Ansprüche 1 bis 4, der ferner folgendes Merkmal aufweist:

eine Einrichtung zum Bandpassfiltern der reflektierten elektromagnetischen Strahlung (28, 66) vor ihrer Erfassung durch die Erfassungseinrichtung (26), um elektromagnetische Strahlung (66) in der reflektierten elektromagnetischen Strahlung (28, 66) mit einer Wellenlänge außerhalb eines Spektrums der elektromagnetischen Strahlungsquelle zu schwächen.

6. Abstandssensor gemäß einem der Ansprüche 1 bis 4, bei der die Photoelektrode (54) mit Fremdatomen dotiert ist, so dass die Photoelektrode (54) Photoelektronen (68) nur auf elektromagnetische Strahlung in einem spektralen Ausschnitt aus einem Spektrum der reflektierten elektromagnetischen Strahlung hin ausgibt, der mit einem Spektrum der elektromagnetischen Strahlungsquelle (12) zumindest teilweise überlappt.

7. Abstandssensor gemäß einem der vorhergehenden Ansprüche, der ferner folgendes Merkmal aufweist:

eine Steuereinrichtung (110) zum zyklischen Ansteuern der Strahlungsquelle (12) und der Erfassungseinrichtung (26) derart, dass in einem ersten Zyklus ($I_A$) eine Länge des Erfassungszeitfensters (164) gleich einer Länge des Bestrahlungszeitfensters (152) und in einem zweiten Zyklus ($II_A$) eine Länge des Erfassungszeitfensters (168) größer als die Länge des Bestrahlungszeitfensters (154) ist, wobei die Auswerteeinrichtung ausgebildet ist, um den Abstand (d) zu dem Objektpunkt (20a, 20b, 20c) aus dem Erfassungssignal, das sich in dem ersten Zyklus ergibt, und dem Erfassungssignal, das sich in dem zweiten Zyklus ergibt, zu ermitteln.

8. Abstandssensor gemäß Anspruch 7, bei dem die Steuereinrichtung (110) ausgebildet ist, um die Strahlungsquelle (12) und die Erfassungseinrichtung (26) derart zyklisch anzusteuern, dass der erste Zyklus ($I_A$) und der zweite Zyklus ($II_A$) ohne Bestrahlung des Objekts in einen dritten und einen vierten Zyklus ($I_B$, $II_B$) wiederholt werden, und wobei die Auswerteeinrichtung ausgebildet ist, um die sich in dem dritten und dem vierten Zyklus ($I_B$, $II_B$) ergebenden Erfassungssignale zur Hintergrundstrahlungskompensation der Erfassungssignale des ersten und des zweiten Zyklus ($I_A$, $II_A$) zu verwenden.

9. Abstandssensor gemäß einem der vorhergehenden Ansprüche, bei dem ein Spektrum der elektromagnetischen Strahlungsquelle sich von 400nm bis 3$\mu$m erstreckt.

10. 3D-Kamera zur Erzeugung eines Abstandsbildes mit einer Mehrzahl von Abstandssensoren gemäß einem der Ansprüche 1 bis 9, bei denen die elektromagnetische Strahlungsquelle durch eine gemeinsame elektromagnetische Strahlungsquelle (12) gebildet ist und die Erfassungseinrichtungen in einem Array angeordnet sind, und mit einer Optik zum Abbilden eines Objekts auf das Array.

11. Verfahren zur Erfassung eines Abstands zu einem Objektpunkt (20a, 20b, 20c), mit
Bestrahlen eines Objektpunkts (20a, 20b, 20c) mit einem Strahlungspuls (30) in einem Bestrahlungszeitfenster (152);
Erfassen von von dem Objektpunkt reflektierter elektromagnetischer Strahlung (28, 66) in einem Erfassungszeitfenster (164), das in vorbestimmter zeitlicher Beziehung zu dem Bestrahlungszeitfenster (152) steht, mittels einer Photoelektrode (54), so dass gemäß dem äußeren Photoeffekt von der Photoelektrode (54) auf die reflektierte elektromagnetische Strahlung (28, 30) hin Photoelektronen (68) abgegeben werden; und

Umwandeln der abgegebenen Photoelektronen (68) in ein Erfassungssignal ($U_{signal}$), das eine Menge der von dem Objektpunkt (20a, 20b, 20c) reflektierten elektromagnetischen Strahlung (28, 30) anzeigt; und

Ermitteln des Abstands (d) zu dem Objektpunkt (20a, 20b, 20c) aus dem Erfassungssignal ($U_{signal}$), wobei der Schritt des Erfassens folgende Teilschritte aufweist:

Verbinden einer Gegenelektrode, die zusammen mit der Photoelektrode (54) eine Kapazität ($C_D$) bildet, mit einem vorbestimmten Potential ($V_{reset}$) vor dem Erfassungszeitfenster (164) und Trennen derselben von dem vorbestimmten Potential ($V_{reset}$) während des Erfassungszeitfensters (164), so dass die Kapazität ($C_D$) während des Erfassungszeitfensters (164) entladen wird;

Verbinden der Photoelektrode mit Masse während des Erfassungszeitfensters (164) und mit dem vorbestimmten Potential ($V_{reset}$) im Anschluss an das Erfassungszeitfenster (164); und

Auslesen einer über die Kapazität ($C_D$) abfallenden Spannung nach dem Erfassungszeitfenster (164), um das Erfassungssignal zu erhalten.

12. Computer-Programm mit einem Programmcode zur Durchführung des Verfahrens nach Anspruch 11, wenn das Computer-Programm auf einem Computer und/oder einem entsprechenden Digital- oder Analogbaustein abläuft.

**Claims**

1. A distance sensor for detecting a distance to an object point (20a, 20b, 20c), comprising:

an electromagnetic radiation source (12) for irradiating the object point (20a, 20b, 20c) by a radiation pulse (30) in an irradiation time window (152);

detection means (26) for detecting electromagnetic radiation (28, 66) reflected from the object point in a detection time window (164) which is in a predetermined temporal relation to the irradiation time window (152), wherein the detection means (26) comprises:

a photoelectrode (54) for, in accordance with the external photoeffect, emitting photoelectrons (68) responsive to the reflected electromagnetic radiation (28, 30); and

an electron detector (60; 300; 370, 374) for transforming the photoelectrons (68) emitted to a detection signal ($U_{Signal}$) indicating a quantity of the electromagnetic radiation (28, 30) reflected from the object point (20a, 20b, 20c); and

evaluation means for determining the distance (d) to the object point (20a, 20b, 20c) from the detection signal ($U_{signal}$), wherein the detection means (26) further comprises:

a counterelectrode (102) which, together with the photoelectrode (54), forms a capacity ($C_D$);

means ($Q_1$) for connecting the counterelectrode (102) to a predetermined potential ($V_{reset}$) before the detection time window (164) and for separating same from the predetermined potential ($V_{reset}$) during the detection time window (164) such that the capacity ($C_D$) is discharged during the detection time window (164); and

means (106) for connecting the photoelectrode (54) to ground during the detection time window (164) and to the predetermined potential ($V_{reset}$) after the detection time window (164); and

means ($Q_2$, $Q_3$) for reading out a voltage across the capacity ($C_D$) after the detection time window (164) to obtain the detection signal.

2. The distance sensor according to claim 1, wherein the electron detector (300; 370, 374) comprises:

an electron multiplier (300) for outputting a number of secondary electrons (306) responsive to the photoelectrons (68) output, wherein the number of secondary electrons (306) correspond to a multiple of a number of the photoelectrons (68); and

an electron accumulator (60, 54, 102) for accumulating the secondary electrons (306) within the detection time window (164); and

a circuit (100) for generating the detection signal in dependence on the secondary electrons (306) accumulated within the detection time window (164).

3. The distance sensor according to claim 2, wherein the electron accumulator (60, 54, 102) includes a counterelectrode (102) which, together with the photoelectrode (54), forms a capacity ($C_D$), the electron multiplier (300) being arranged between the counterelectrode (102) and the photoelectrode (54).

4. The distance sensor according to claim 2 or 3, wherein the electron multiplier (300) is controllable to output in a first state no secondary electrons (306) and to output in a second state a multiple of the photoelectrons (68) to secondary electrons (306), and further comprising:

   means (110) for controlling the electron multiplier (300) to put same to the second state during the detection time window (164) and to the first state before and after.

5. The distance sensor according to one of claims 1 to 4, further comprising:

   means for bandpass-filtering the reflected electromagnetic radiation (28, 66) before being detected by the detection means (26) to weaken electromagnetic radiation (66) in the reflected electromagnetic radiation (28, 66) with a wavelength outside a spectrum of the electromagnetic radiation source.

6. The distance sensor according to one of claims 1 to 4, wherein the photoelectrode (54) is doped with foreign atoms such that the photoelectrode (54) will output photoelectrons (68) only responsive to electromagnetic radiation in a spectral section from a spectrum of the reflected electromagnetic radiation, which at least partly overlaps a spectrum of the electromagnetic radiation source (12).

7. The distance sensor according to one of the preceding claims, further comprising:

   control means (110) for cyclically driving the radiation source (12) and the detection means (26) such that in a first cycle ($I_A$) a length of the detection time window (164) equals a length of the irradiation time window (152) and in a second cycle ($II_A$) a length of the detection time window (168) is greater than the length of the irradiation time window (154), the evaluation means being formed to determine the distance (d) to the object point (20a, 20b, 20c) from the detection signal resulting in the first cycle and the detection signal resulting in the second cycle.

8. The distance sensor according to claim 7, wherein the control means (110) is formed to cyclically drive the radiation source (12) and the detection means (26) such that the first cycle ($I_A$) and the second cycle ($II_A$) are repeated, without irradiating the object, in a third and fourth cycles ($I_B$, $II_B$), and the evaluation means being formed to use the detection signals resulting in the third and fourth cycles ($I_B$, $II_B$) for compensating background radiation of the detection signals of the first and second cycles ($I_A$, $II_A$).

9. The distance sensor according to one of the preceding claims, wherein a spectrum of the electromagnetic radiation source is from 400 nm to 3 $\mu$m.

10. A 3D camera for generating a distance image comprising a plurality of distance sensors according to one of claims 1 to 9, where the electromagnetic radiation source is formed by a common electromagnetic radiation source (12) and the detection means are arranged in an array, and optics for imaging an object onto the array.

11. A method for detecting a distance to an object point (20a, 20b, 20c), comprising the steps of:

   irradiating an object point (20a, 20b, 20c) by a radiation pulse (30) in an irradiation time window (152);
   detecting electromagnetic radiation (28, 66) reflected from the object point in a detection time window (164) which is in a predetermined temporal relation to the irradiation time window (152), by means of a photoelectrode (54) such that photoelectrons (68) are emitted responsive to the reflected electromagnetic radiation (28, 30) by the photoelectrode (54) according to the external photoeffect; and
   transforming the emitted photoelectrons (68) to a detection signal ($U_{signal}$) indicating a quantity of the electromagnetic radiation (28, 30) reflected by the object point (20a, 20b, 20c); and
   determining the distance (d) to the object point (20a, 20b, 20c) from the detection signal ($U_{signal}$), wherein the step of detecting further comprises substeps of:

   connecting a counterelectrode, which together with the photoelectrode (54) forms a capacity ($C_D$), to a

predetermined potential ($V_{reset}$) before the detection time window (164) and separating same from the predetermined potential ($V_{reset}$) during the detection time window (164) such that the capacity ($C_D$) is discharged during the detection time window (164);

connecting the photoelectrode to ground during the detection time window (164) and to the predetermined potential ($V_{reset}$) after the detection time window (164); and

reading out a voltage across the capacity ($C_D$) after the detection time window (164) to obtain the detection signal.

**12.** A computer program having a program code for performing the method according to claim 11 when the computer program runs on a computer and/or on a corresponding digital or analog element.


**Revendications**

**1.** Capteur de distance pour saisir une distance par rapport à un point d'objet (20a, 20b, 20c), avec

une source de rayonnement electromagnétique (12) destinée à irradier le point d'objet (20a, 20b, 20c) avec une impulsion de rayonnement (30) dans une fenêtre de temps d'irradiation (152);

un moyen de saisie (26) destiné à saisir le rayonnement électromagnétique réfléchi par le point d'objet (28, 66) dans une fenêtre de temps de détection (164) qui se trouve selon un rapport dans le temps prédéterminé avec la fenêtre de temps d'irradiation (152), le moyen de saisie (26) présentant les caractéristiques suivantes:

une photoélectrode (54) destinée à délivrer, selon l'effet photoélectrique extérieur, des photoélectrons (68) vers le rayonnement électromagnétique réfléchi (28, 30); et

un détecteur d'électrons (60; 300; 370, 374) destiné à convertir les photoélectrons délivrés (68) en un signal de détection ($U_{signal}$) indiquant une quantité de rayonnement électromagnétique (28, 30) réfléchi par le point d'objet (20a, 20b, 20c); et

une unité d'évaluation destinée à déterminer la distance (d) par rapport au point d'objet (20a, 20b, 20c) à partir du signal de détection ($U_{signal}$), le moyen de saisie (26) présentant, par ailleurs, les caractéristiques suivantes:

une contre-électrode (102) qui forme, ensemble avec la photoélectrode (54), une capacité ($C_D$);

un moyen ($Q_1$) pour raccorder la contre-électrode (102) à un potentiel prédéterminé ($V_{reset}$) avant la fenêtre de temps de détection (164) et à la séparer du potentiel prédéterminé ($V_{reset}$) pendant la fenêtre de temps de détection (164), de sorte que la capacité ($C_D$) soit déchargée pendant la fenêtre de temps de détection (164); et

un moyen (106) pour raccorder la photoélectrode (54) à la masse pendant la fenêtre de temps de détection (164) et au potentiel prédéterminé ($V_{reset}$) à la suite de la fenêtre de temps de détection (164); et

un moyen ($Q_2$, $Q_3$) pour lire une tension tombant à la capacité ($C_D$) après la fenêtre de temps de détection (164), pour obtenir le signal de détection.

**2.** Capteur de distance selon la revendication 1, dans lequel le détecteur d'électrons (300; 370, 374) présente les caractéristiques suivantes:

un multiplicateur d'électrons (300) destiné à délivrer un nombre d'électrons secondaires (306) en réaction aux photoélectrons délivrés (68), le nombre d'électrons secondaires (306) correspondant à un multiple d'un nombre de photoélectrons (68); et

un accumulateur d'électrons (60, 54, 102) destiné à accumuler les électrons secondaires (306) dans la fenêtre de temps de détection (164); et

un circuit (100) destiné à générer le signal de détection en fonction des électrons secondaires (306) accumulés à l'intérieur de la fenêtre de temps de détection (164).

**3.** Capteur de distance selon la revendication 2, dans lequel l'accumulateur d'électrons (60, 54, 102) comporte une contre-électrode (102) qui forme, ensemble avec la photoélectrode (54), une capacité ($C_D$), le multiplicateur d'électrons (300) étant disposé entre la contre-électrode (102) et la photoélectrode (54).

**4.** Capteur de distance selon la revendication 2 ou 3, dans lequel le multiplicateur d'électrons (300) peut être commandé pour, dans un premier état, ne pas délivrer d'électrons secondaires (306) et, dans un deuxième état, délivrer une quantité d'électrons secondaires (306) multiple des photoélectrons (68), et présentant, par ailleurs, la caractéristique suivante:

un moyen (110) destiné à commander le multiplicateur d'électrons (300), pour déplacer celui-ci, pendant la fenêtre de temps de détection (164), au deuxième état et, avant et après, au premier état.

5. Capteur de distance selon l'une des revendications 1 à 4, présentant, par ailleurs, la caractéristique suivante:

   un moyen pour filtrer passe-bas le rayonnement électromagnétique réfléchi (28, 66) avant sa détection par le moyen de saisie (26), pour affaiblir le rayonnement électromagnétique (66) dans le rayonnement électromagnétique réfléchi (28, 66) avec une longueur d'onde en dehors d'un spectre de la source de rayonnement électromagnétique.

6. Capteur de distance selon l'une des revendications 1 à 4, dans lequel la photoélectrode (54) est dopée d'atomes étrangers, de sorte que la photoélectrode (54) ne délivre de photoélectrons (68) que vers un rayonnement électromagnétique dans un segment spectral d'un spectre du rayonnement électromagnétique réfléchi qui vient au moins partiellement en recouvrement avec un spectre de la source de rayonnement électromagnétique (12).

7. Capteur de distance selon l'une des revendications précédentes, présentant, par ailleurs, la caractéristique suivante:

   un moyen de commande (110) destiné à activer cycliquement la source de rayonnement (12) et le moyen de saisie (26) de sorte que, dans un premier cycle ($I_A$), une longueur de la fenêtre de temps de détection (164) est égale à une longueur de la fenêtre de temps d'irradiation (152) et, dans un deuxième cycle ($II_A$), une longueur de la fenêtre de temps de détection (168) est plus grande que la longueur de la fenêtre de temps d'irradiation (154), l'unité d'évaluation étant réalisée de manière à déterminer la distance (d) par rapport au point d'objet (20a, 20b, 20c) à partir du signal de détection qui est obtenu dans le premier cycle et du signal de détection qui est obtenu dans le deuxième cycle.

8. Capteur de distance selon la revendication 7, dans lequel le moyen de commande (110) est réalisé de manière à activer cycliquement la source de rayonnement (12) et le moyen de saisie (26) de sorte que le premier cycle ($I_A$) et le deuxième cycle ($II_A$) soient répétés sans irradiation de l'objet dans un troisième et un quatrième cycle ($I_B$, $II_B$), et l'unité d'évaluation étant réalisé de manière à utiliser les signaux de détection obtenus dans le troisième et le quatrième cycle ($I_B$, $II_B$) pour la compensation de rayonnement de fond des signaux de détection du premier et du deuxième cycle ($I_A$, $II_A$).

9. Capteur de distance selon l'une des revendications précédentes, dans lequel un spectre de la source de rayonnement électromagnétique s'étend de 400 nm à 3 $\mu$m.

10. Caméra 3D destinée à générer une image de distance avec une pluralité de capteurs de distance selon l'une des revendications 1 à 9 dans lesquels la source de rayonnement électromagnétique est formée par une source de rayonnement électromagnétique commune (12) et les moyens de saisie sont disposés selon une rangée, et avec une optique pour reproduire un objet sur la rangée.

11. Procédé pour détecter une distance par rapport à un point d'objet (20a, 20b, 20c), avec
    irradier un point d'objet (20a, 20b, 20c) avec une impulsion de rayonnement (30) dans une fenêtre de temps d'irradiation (152);
    détecter le rayonnement électromagnétique réfléchi du point d'objet (28, 66) dans une fenêtre de temps de détection (164) qui se trouve selon un rapport dans le temps prédéterminé avec la fenêtre de temps d'irradiation (152), au moyen d'une photoélectrode (54) de sorte que, selon l'effet photoélectrique extérieur, des photoélectrons (68) soient délivrées de la photoélectrode (54) vers le rayonnement électromagnétique réfléchi (28, 30); et
    convertir les photoélectrons délivrés (68) en un signal de détection ($U_{signal}$) indiquant une quantité de rayonnement électromagnétique (28, 30) réfléchi par le point d'objet (20a, 20b, 20c); et
    déterminer la distance (d) par rapport au point d'objet (20a, 20b, 20c) à partir du signal de détection ($U_{signal}$), l'étape de détection présentant les étapes partielles suivantes consistant à :

    raccorder une contre-électrode qui forme, ensemble avec la photoélectrode (54), une capacité ($C_D$), à un potentiel prédéterminé ($V_{reset}$) avant la fenêtre de temps de détection (164) et la séparer du potentiel prédéterminé ($V_{reset}$) pendant la fenêtre de temps de détection (164), de sorte que la capacité ($C_D$) soit déchargée pendant la fenêtre de temps de détection (164);
    raccorder la photoélectrode à la masse pendant la fenêtre de temps de détection (164) et au potentiel prédéterminé ($V_{reset}$) à la suite de la fenêtre de temps de détection (164); et

lire une tension tombant à la capacité ($C_D$) après la fenêtre de temps de détection (164), pour obtenir le signal de détection.

**12.** Programme d'ordinateur avec un code de programme pour la mise en oeuvre du procédé selon la revendication 11, lorsque le programme d'ordinateur est exécuté sur un ordinateur et/ou un module numérique ou analogique.

FIG. 1

FIG. 2

FIG. 3

FIG. 4

FIG. 5

EP 1 678 523 B1

FIG. 6

FIG. 7

FIG. 8

FIG. 9

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757595 A1

- DE 19927694 C1